# EUROPEAN PATENT SPECIFICATION

(11) **EP 2 564 251 B1**
(45) Date of publication and mention of the grant of the patent: **07.06.2017**
(21) Application number: 11718871.4
(22) Date of filing: 29.04.2011
(51) Int. Cl.: G02B 6/44

(54) **FIBER OPTIC HOUSINGS WITH REMOVABLE PANEL CLIPS**
GLASFASERGEHÄUSE MIT ENTFERNBAREN PLATTENKLEMMEN
BOÎTIERS DE FIBRES OPTIQUES AVEC ATTACHES DE PANNEAUX AMOVIBLES

(30) Priority: 30.04.2010 US 329925 P
(43) Date of publication of application: 06.03.2013
(73) Proprietor: Corning Optical Communications LLC, Hickory, NC 28601 (US)
(72) Inventor: COTE, Monique L., Fort Worth Texas 76137 (US); FRAZIER, Brent Michael, Haslet, Texas 76052 (US); GIRAUD, William Julius McPhil, Azle, Texas 76020 (US); JAY, Raymond G., Mansfield Texas 76063 (US); RODRIGUEZ, Diana, Fort Worth, Texas 76137 (US)
(74) Representative: Sturm, Christoph
(86) International application number: PCT/US2011/034574
(87) International publication number: WO 2011/137350

(56) References cited:
- WO-A2-2006/127400
- US-A- 5 497 444
- US-A- 5 724 467
- US-A1- 2004 011 750
- US-B1- 6 515 227

## Description

### RELATED APPLICATIONS

The present application claims priority to U.S. Provisional Patent Application Serial No. 61/329,925, filed April 30, 2010, entitled "Fiber Optic Housing Adapted to Accommodate Both Modules and Panels".

The present application is related to US Patent Application Serial No. 12/940,585, filed November 5, 2010, entitled "Fiber Optic Housing Adapted to Accommodate Both Modules and Panels".

The present application is related to U.S. Provisional Patent Application Serial No. 61/329,948, filed April 30, 2010, entitled "Stackable Shelf For A Fiber Optic Housing".

The present application is also related to U.S. Patent Application Serial No. 12/940,699, filed November 5, 2010, entitled "Stackable Shelves For A Fiber Optic Housing, and Related Components and Methods".

The present application is also related to U.S. Provisional Patent Application Serial No. 61/329,898, filed April 30, 2010, entitled "Rotatable Routing Guide Assembly".

The present application is also related to U.S. Provisional Patent Application Serial No. 61/332,572, filed May 7, 2010, entitled "Fiber Optic Housing".

The present application is also related to U.S. Provisional Patent Application Serial No. 61/332,548, filed May 7, 2010, entitled "Attachment Housing For A Fiber Optic Housing".

The present application is also related to U.S. Provisional Patent Application Serial No. 61/332,529, filed May 7, 2010, entitled "Fiber Optic Management Area In A Fiber Optic Housing".

The present application is also related to U.S. Provisional Patent Application Serial No. 61/332,508, filed May 7, 2010, entitled "Grommet and Routing Clip Assembly".

The present application is also related to U.S. Provisional Patent Application Serial No. 61/180,331, filed May 21, 2009, entitled "Fiber Optic Equipment Guides and Rails Configured With Stopping Position(s), and Related Equipment".

The present application is also related to U.S. Patent Application Serial No. 12/576,806, filed October 9, 2009, entitled "Fiber Optic Equipment Guides and Rails Configured With Stopping Position(s), and Related Equipment and Methods".

### BACKGROUND

### Field of the Disclosure

The technology of the disclosure relates to fiber optic hardware, and more particularly to fiber optic housings suitable for supporting fiber optic equipment, including fiber optic modules/cassettes and fiber optic panels.

### Technical Background

Benefits of optical fiber include extremely wide bandwidth and low noise operation. Because of these advantages, optical fiber is increasingly being used for a variety of applications, including but not limited to broadband voice, video, and data transmission. Fiber optic networks employing optical fiber are being developed and used to deliver voice, video, and data transmissions to subscribers over both private and public networks. These fiber optic networks often include separated connection points linking optical fibers to provide "live fiber" from one connection point to another connection point. In this regard, fiber optic equipment is located in data distribution centers or central offices to support interconnections.

The fiber optic equipment is customized based on the application need. The fiber optic equipment is typically included in housings designed to support the fiber optic equipment, which are mounted in equipment racks to optimize use of space. One example of such fiber optic equipment is a fiber optic module. A fiber optic module is designed to provide cable-to-cable fiber optic connections and manage the polarity of fiber optic cable connections. A fiber optic module is mounted to a chassis or housing that is specifically designed to support fiber optic modules/cassettes. Another example of such fiber optic equipment is a fiber optic panel (also referred to as a "patch panel"). A fiber optic panel is designed to provide connection or termination points for optical fiber. A fiber optic panel typically includes fiber optic adapters that are configured to receive fiber optic connectors connected to the optical fiber to be connected or terminated. A fiber optic panel is typically mounted to a chassis or housing that is specifically designed to support fiber optic panels.

The need for particular fiber optic equipment may change. For example, it may be needed or desired to provide additional fiber optic panels at a data distribution center to support a fiber optic network. In this regard, housings specifically configured to support the additional fiber optic panels are provided and installed in available space in equipment racks at the data distribution center. If additional fiber optic modules /cassettes are needed at a data distribution center, housings specifically configured to support additional fiber optic modules or cassettes are provided and installed in available space in equipment racks at the data distribution center. However in these examples, the correct housing type to support the specific additional fiber optic equipment needed may not be readily available thus delaying installations and/or reconfigurations. Even if the correct housing types are readily available, they come at additional cost and requirements for inventory space to store the different types of housings needed to support the different types of fiber optic equipment that may be added or reconfigured. Further, the available space in an equipment rack for supporting additional fiber optic equipment may only be present in existing installed housings that are not fully populated. However, the housings with available space may not be configured to support the particular type of fiber optic equipment to be added.

A fiber optic shelf according to the preamble of claim 1 is known from US5 724 467 A, US 2004/011750 A1, US 6 515 227 B1 and US 5 497 444 A.

### Summary of the detailed description

The invention relates to a shelf as defined in claim 1. A method of supporting fiber optic panels is defined in claim 11.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIGS. 1A****-1C** are perspective, front, and side views, respectively, of an exemplary stackable shelf that can be movably inserted in a fiber optic housing and configured with stacker assemblies to support fiber optic equipment of height spaces;
**FIGS. 2A****-2C** are perspective, top, and front views, respectively, of the stackable shelf in **FIGS. 1A****-1C** supporting fiber optic panels configured with stacker assemblies to support fiber optic panels in a 1-U height space;
**FIG. 2D** is a perspective view of the stackable shelf configured with removable stacker assemblies to support fiber optic panels in a 1U height space in **FIGS. 2A****-2C,** with optical fibers routed through rear routing guides secured to the stackable shelf and terminated to the rear of fiber optic adapters disposed in the fiber optic panels;
**FIG. 3A** is a perspective view of the stackable shelf in **FIGS. 2A****-2C,** but configured with elongated fiber routing guides attached to the stacker assemblies;
**FIG. 3B** is a perspective view of an alternative stackable shelf with rear routing guides secured to the stackable shelf and rotated approximately forty-five (45) degrees from the rear routing guides disposed in the stackable shelf in **FIG. 3A****;**
**FIG. 4** is a perspective view of the stackable shelf in **FIGS. 1A****-2D** without any fiber optic equipment installed therein;
**FIG. 5A** is a bottom close-up perspective view of a front removable stacker assembly installed and secured to the stackable shelf in **FIG. 4****;**
**FIG. 5B** is a top perspective view of the stackable shelf in **FIG. 4** with the front removable stacker assembly in **FIG. 5A** attached to the mounting surface to support fiber optic panels in a 1U height space;
**FIG. 5C** is a bottom close-up perspective view of a rear removable stacker assembly installed and secured to the stackable shelf in **FIG. 4****;**
**FIG. 5D** is a top perspective view of the stackable shelf in **FIG. 4** configured with the front removable stacker assembly and rear removable stacker assembly in **FIG. 5C** attached to the mounting surface to support fiber optic modules in a 1-U height space;
**FIG. 6A** and **6B** are perspective and side views, respectively, of the stackable shelf in **FIGS. 1A****-2D** including front and rear removable stacker assemblies installed in the stackable shelf and supporting a fiber optic panel and a fiber optic module;
**FIGS. 6C** and **6D** are front perspective and top views, respectively, of an exemplary fiber optic module that can be supported by the rear stacker assemblies installed in the stackable shelf in **FIG. 4****,** as illustrated in **FIGS. 6A** and **6B****;**
**FIG. 7** is a perspective view of the stackable shelf in **FIGS. 1A****-2D** including front and rear removable stacker assemblies to support two fiber optic modules in a 1U height space;
**FIGS. 8A****-8C** are perspective, front, and rear views, respectively, of the stackable shelf in **FIGS. 1A****-2D** including an additional front removable stacker assemblies to support fiber optic panels in a 2U height space;
**FIG. 9** is a perspective view of the stackable shelf in **FIGS. 1A****-2D** configured with removable stacker assemblies to support an additional fiber optic panel and additional fiber optic module in a 2U height space;
**FIG. 10** is a perspective view of the stackable shelf in **FIGS. 1A****-2D** configured with removable stacker assemblies to support additional fiber modules in a 2U height space;
**FIG. 11** is a perspective view of the stackable shelf in **FIGS. 1A****-2D** configured with removable stacker assemblies to support additional fiber modules in a 3U height space;
**FIGS. 12A****-12F** are perspective exploded, assembled perspective, front, side, bottom, and top views, respectively, of a front removable stacker assembly;
**FIG. 13** is a perspective view of an exemplary front routing guide in **FIGS. 1A****-2D** positioned to be secured to the front stacker assembly in **FIGS. 12A****-12F** installed in the stackable shelf of **FIG. 4****;**
**FIGS. 14A** and **14B** are side and rear views, respectively, of a front fiber routing guide that attaches to the front stacker assembly illustrated in **FIG. 13****;**
**FIGS. 15A** and **15B** are perspective and side views, respectively, of the front stacker assembly in **FIGS. 12A****-12F** with an exemplary removable panel clip secured thereto to support securing fiber optic panels to the stackable shelf in **FIG. 4****;**
**FIGS. 16A****-16E** are perspective, right side, left side, top, and front views, respectively, of the removable panel clip;
**FIGS. 17A****-17F** are exploded perspective, assembled perspective, top, side, front, and bottom views, respectively, of a rear removable stacker assembly;
**FIGS. 18A****-18D** are perspective, front, top, and side views, respectively, of the fiber body holder in **FIGS. 1A****-2D;**
**FIG. 19A** is a bottom close-up view of the fiber body holder in **FIGS. 18A-**18D installed and secured to the stackable shelf in **FIG.** 4;
**FIG. 19B** is a side view of the fiber body holder in **FIGS. 18A****-18D** installed and secured to the stackable shelf in **FIG. 4****;**
**FIG. 20** is a perspective view of a second fiber body holder stacked on top of a first body holder in **FIGS. 18A****-18D** installed and secured to the stackable shelf in **FIG. 4****;**
**FIG. 21** is a top close-up view of the right side of the stackable shelf illustrating an exemplary rail system configured to allow the stackable shelf to be secured in a fiber optic housing;
**FIG. 22** is a side view of the right side, transparent view of the stackable shelf of **FIGS. 1A****-2D** installed in an exemplary fiber optic housing;
**FIG. 23** is a perspective view of the fiber optic housing that includes the stackable shelf in **FIG. 22** with mounting brackets installed in a rear position of the fiber optic housing;
**FIG. 24** is a perspective view of the fiber optic housing that includes the stackable shelf in **FIG. 22** with mounting brackets installed in a front position on the fiber optic housing;
**FIG. 25** includes perspective views of exemplary components used to provide a stackable shelf supporting fiber optic equipment in a fiber optic housing according to certain embodiments disclosed herein;
**FIG. 26** is a perspective view of an alternative fiber optic housing configured to support fiber optic modules and fiber optic panels in a vertical orientation;
**FIGS. 27A****-27C** are perspective, perspective close-up, and perspective close-up cut section views, respectively, of a removable panel clip installed in the fiber optic housing of **FIG. 26** to enable the fiber optic housing to support fiber optic panels and fiber optic modules interchangably;
**FIG. 28A** is a perspective view of the fiber optic housing in **FIG. 27A** with the removable panel clips in **FIGS. 27A****-27C** installed to support fiber optic panels;
**FIG. 28B** is a perspective view of the fiber optic housing in **FIG. 27A** with the removable panel clips in **FIGS. 27A****-27C** installed and supporting fiber optic panels in the fiber optic housing;
**FIG. 29** is a perspective view of an alternative exemplary removable panel clip installed in an alternative fiber optic housing to enable the fiber optic housing to interchangeably support fiber optic panels and fiber optic modules;
**FIG. 30A****-30D** are bottom, side, front, and back views, respectively, of the removable panel clip in **FIG. 29****;**

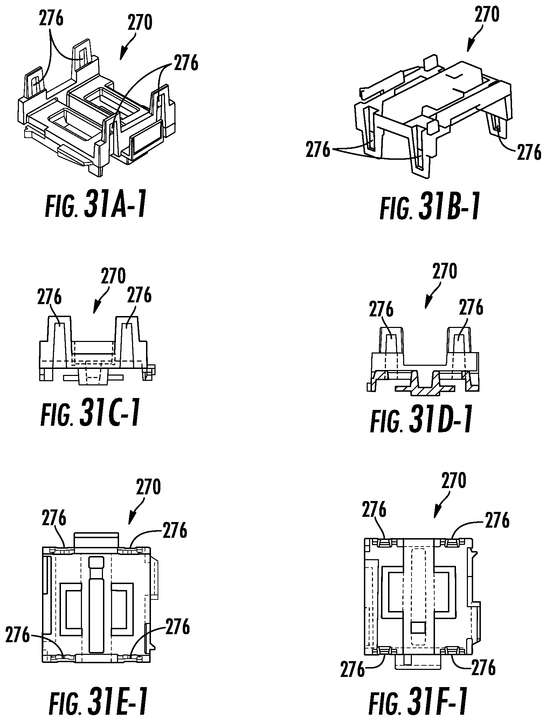

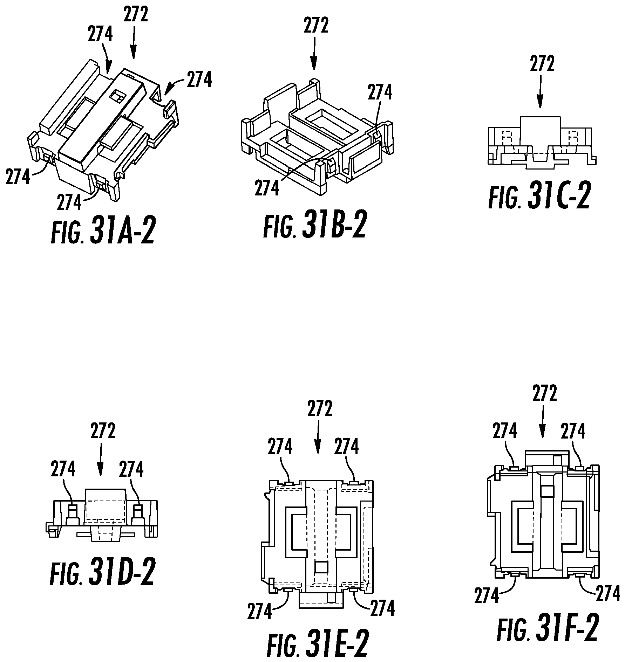

**FIGS. 31A-1** and **31A-2** are top perspective views of front stacker assembly components that are configured to be assembled together to form an alternative assembled front stacker assembly that can be installed in a stackable shelf to support fiber optic equipment;
**FIGS. 31B-1** and **31B-2** are bottom perspective views of front stacker assembly components in **FIGS. 31A-1** and **31A-2,** respectively, that are configured to be assembled together to form an alternative assembled front stacker assembly that can be installed in a stackable shelf to support fiber optic equipment;
**FIGS. 31C-1** and **31C-2** are first side views of front stacker assembly components in **FIGS. 31A-1** and **31A-2,** respectively, that are configured to be assembled together to form an alternative assembled front stacker assembly that can be installed in a stackable shelf to support fiber optic equipment;
**FIGS. 31D-1** and **31D-2** are second side views of front stacker assembly components in **FIGS. 31A-1** and **31A-2,** respectively, that are configured to be assembled together to form an alternative assembled front stacker assembly that can be installed in a stackable shelf to support fiber optic equipment;
**FIGS. 31E-1** and **31E-2** are bottom views of front stacker assembly components in **FIGS. 31A-1** and **31A-2,** respectively, that are configured to be assembled together to form an alternative assembled front stacker assembly that can be installed in a stackable shelf to support fiber optic equipment;
**FIGS. 31F-1** and **31F-2** are top views of front stacker assembly components in **FIGS. 31A-1** and **31A-2,** respectively, that are configured to be assembled together to form an alternative assembled front stacker assembly that can be installed in a stackable shelf to support fiber optic equipment;

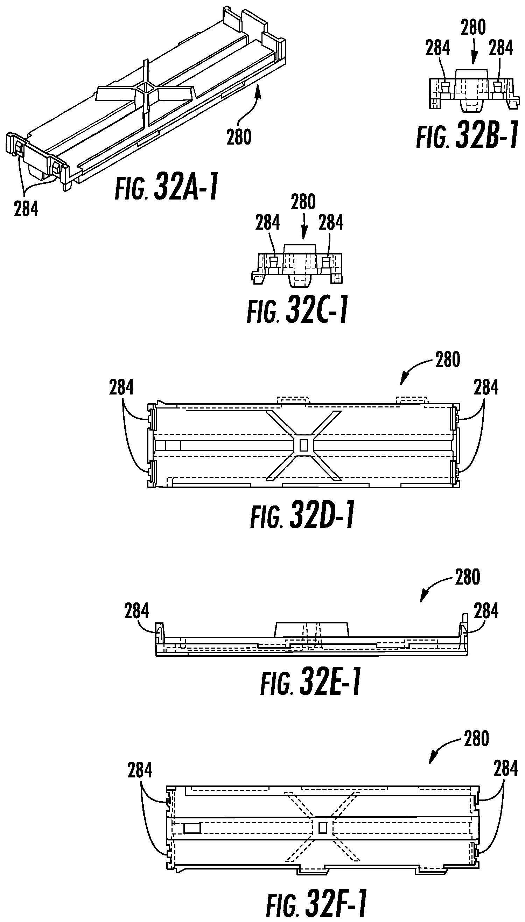

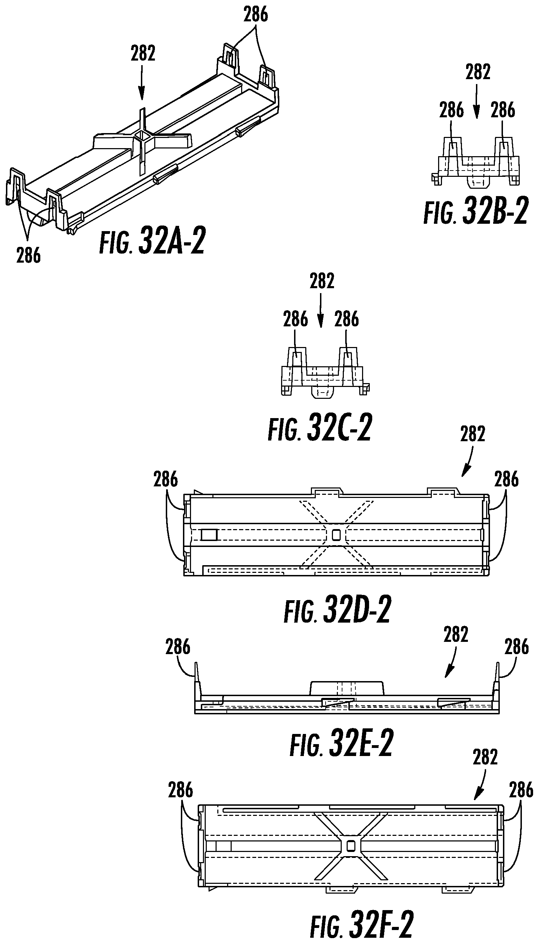

**FIGS. 32A-1** and **32A-2** are top perspective views of rear stacker assembly components that are configured to be assembled together to form an alternative assembled rear stacker assembly that can be installed in a stackable shelf to support fiber optic equipment;
**FIGS. 32B-1** and **32B-2** are first side views of rear stacker assembly components in **FIGS. 32A-1** and **32A-2,** respectively, that are configured to be assembled together to form an alternative assembled rear stacker assembly that can be installed in a stackable shelf to support fiber optic equipment;
**FIGS. 32C-1** and **32C-2** are second side views of rear stacker assembly components in **FIGS. 32A-1** and **32A-2,** respectively, that are configured to be assembled together to form an alternative assembled rear stacker assembly that can be installed in a stackable shelf to support fiber optic equipment;
**FIGS. 32D-1** and **32D-2** are top views of rear stacker assembly components in **FIGS. 32A-1** and **32A-2,** respectively, that are configured to be assembled together to form an alternative assembled rear stacker assembly that can be installed in a stackable shelf to support fiber optic equipment;
**FIGS. 32E-1** and **32E-2** are third side views of rear stacker assembly components in **FIGS. 32A-1** and **32A-2,** respectively, that are configured to be assembled together to form an alternative assembled rear stacker assembly that can be installed in a stackable shelf to support fiber optic equipment; and
**FIGS. 32F-1** and **32F-2** are bottom views of rear stacker assembly components in **FIGS. 32A-1** and **32A-2,** respectively, that are configured to be assembled together to form an alternative assembled rear stacker assembly that can be installed in a stackable shelf to support fiber optic equipment.

### DETAILED DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

Embodiments disclosed in the detailed description include fiber optic housings configured to accommodate fiber optic modules and fiber optic panels, and related components and methods. Fiber optic cassettes may also be accommodated. Throughout this disclosure, the term "fiber optic module" is intended to refer to either a fiber optic module or fiber optic cassette including but not limited to a splicing cassette. In one embodiment, a fiber optic apparatus is provided. The fiber optic apparatus is comprised of a fiber optic housing. The fiber optic apparatus is also comprised of one or more removable panel clips disposed in the fiber optic housing. Each of the one or more removable panel clips includes at least one receptacle configured to receive an insert of a fiber optic panel to support the fiber optic panel in the fiber optic housing.

In another embodiment, a fiber optic housing comprising a stackable shelf, a panel clip, a front stacker assembly, and a rear stacker assembly is provided. The panel clip, the front stacker assembly, and the rear stacker assembly removably attach to the stackable shelf to allow the stackable shelf to accommodate one or both of a fiber optic module and a fiber optic panel interchangably. The panel clip serves as an adapter piece, which allows an insert, such as a plunger for plunger-style panels, to be used where a track or rail system or method of retention is used. The front stacker assembly and the rear stacker assembly allow a rail system or track-type system fiber optic module to be used in a housing that accommodates fiber optic panels, including plunger-style fiber optic panels.

The designation "U" refers to a standard equipment shelf size of a fiber optic equipment rack or a cabinet. This may also be referred to as "RU." For example, an equipment rack may support 1U-sized shelves, with "U" equal to a standard 1.75 inches in height and nineteen (19) inches in width. In certain applications, the width of "U" may be twenty-three (23) inches. Typically, the more rack space (the more "U's") a fiber optic housing takes up, the higher the fiber capacity in the fiber optic housing.

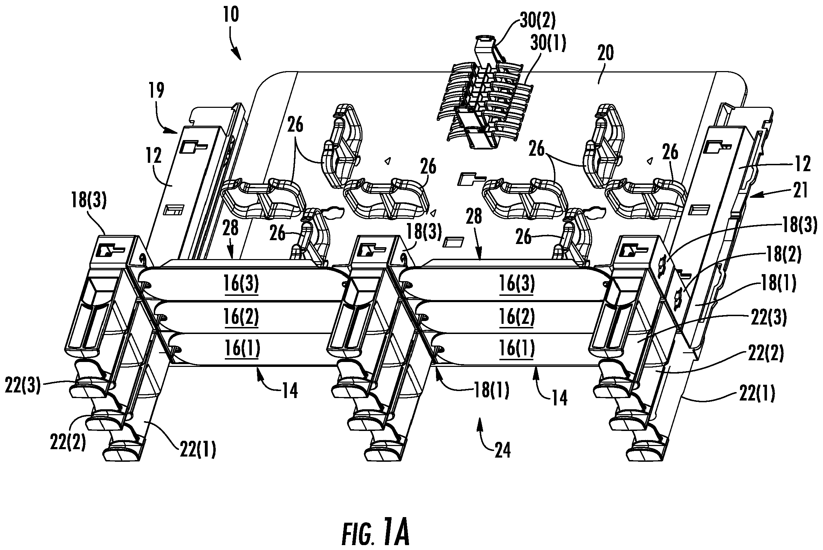

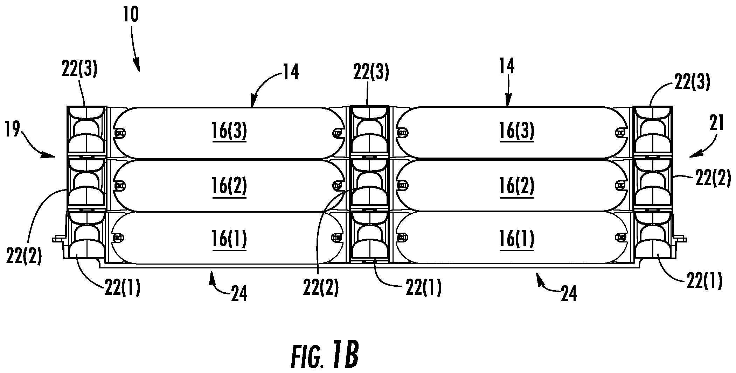

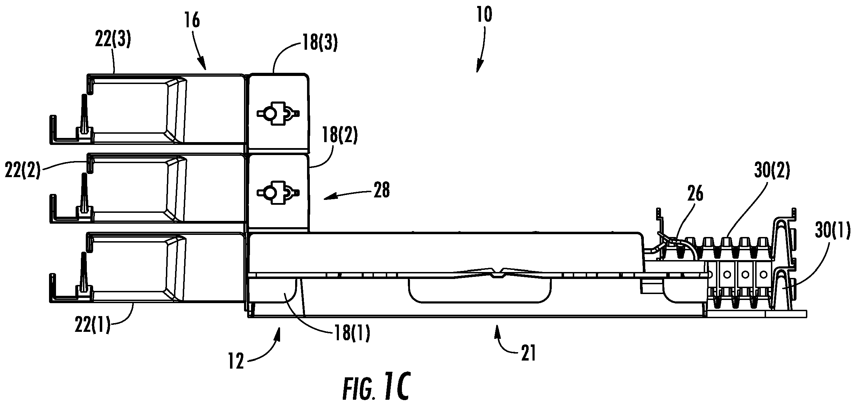

**FIGS. 1-32B** illustrate respectively an exemplary stackable shelf configured with one or more removable stacker assemblies to support fiber optic equipment of varying heights. A stacker assembly is any component, member or assembly that is configurable to support fiber optic equipment at a different desired height or heights (e.g., U spaces) from a surface, including but not limited to a mounting surface provided for a fiber optic shelf. The stackable shelf may be movably mounted in a fiber optic housing. The stackable shelf contains features that allow fiber optic equipment to be stacked at different height spaces in the stackable shelf thereby increasing its rack unit height by using multiples of the same components. Depending on the nature of an installation, a stackable shelf configured for a 1U fiber optic housing could also be converted for use in a higher U space fiber optic housing, such as 2U, 3U, or greater U size, and fractional U sizes (e.g., 1/3U, 2/3U, 1 1/3U, 2 2/3U, etc.) as examples, by stacking or removing these components in the factory or in the field at the installation site, as needed or desired. The stackable shelves disclosed herein are shown as being configured in 1U, 2U, and 3U sizes, but note that any U sizes are possible greater than 3U and fractional U sizes below and above 1U, for example 1/3U, 2/3U, 3/4U, 2/3U, 1 1/3U, 2 2/3U, 3 1/2U, etc. The stackable shelves and the heights at which they can support fiber optic equipment is not limited in this manner.

In this regard, **FIGS. 1A****-1C** are perspective, front, and side views, respectively, of an exemplary stackable shelf **10** configured to be movably inserted in a fiber optic housing. The stackable shelf **10** is configured with stacker assemblies **12** to support fiber optic equipment **14** in multiple U height spaces depending on how the stackable shelf **10** is configured. In this example, the fiber optic equipment **14** is comprised of fiber optic panels **16(1)-16(3).** Each fiber optic panel **16(1)-16(3)** is of 1U height space. Fiber optic panel **16(1)** is disposed in a first 1U height space. Fiber optic panel **16(2)** is stacked on top of the fiber optic panel **16(1)** and is disposed in a second 1U height space. Fiber optic panel **16(3)** is stacked on top of the fiber optic panel **16(2)** and is disposed in a third 1U space.

The designation (1) for a particular component or part referenced in this application is to signify that such component is located adjacent in the first or bottom U space of the stackable shelf **10** in this example. The designation (2) for a particular component or part referenced in this application is to signify that such component is located adjacent in the second U space of the stackable shelf **10** in this example, stacked above components disposed in the first U space of the stackable shelf **10** in this example. The designation (3) for a particular component or part referenced in this application is to signify that such component is located adjacent in the third U space of the stackable shelf **10** in this example, stacked above components disposed in the second U space of the stackable shelf 10 in this example.

In this embodiment as illustrated in **FIGS. 1A****-1C**, to support the fiber optic panels **16(1)-16(3)** in the stackable shelf in a 3U configuration, front stacker assemblies **18(1)-18(3)** are stacked on top of each other about a mounting surface **20** to support the three (3) fiber optic panels **16(1)-16(3)** to a 3U height space. In this embodiment, three (3) front stacker assemblies **18(1)** are provided in the mounting surface **20** to support two (2) fiber optic panels **16(1).** Two (2) front stacker assemblies **18(1)** are integrated into the stacker assemblies **12** that are integrated on a left end **19** and a right end **21** of the mounting surface **20,** and which may or may not be configured to be removable from the mounting surface **20.** The stacker assembly **18(1)** disposed in the center section of the mounting surface **20** is removably attached to the mounting surface between the left end **19** and the right end **21.** In this manner, two (2) fiber optic panels **16(1)** can be supported by the stackable shelf **10** in a 1U height space, as illustrated in **FIGS. 1A****-1C**, since two (2) stacker assemblies **18(1)** are provided to support one (1) fiber optic panel **16(1)** therebetween as will be described in more detail below. As will also be described in more detail below, the stackable shelf **10** can also be configured to support fiber optic modules (and/or fiber optic cassettes) in multiple U height spaces, including to height spaces less than 3U and to height spaces greater than 3U.

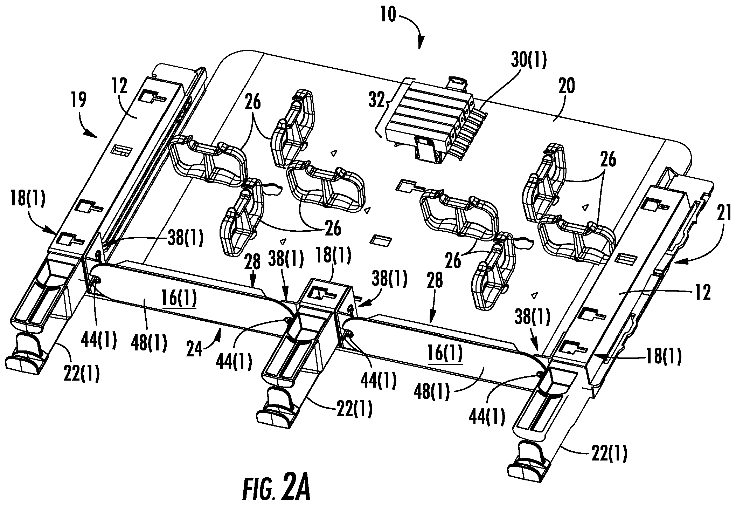

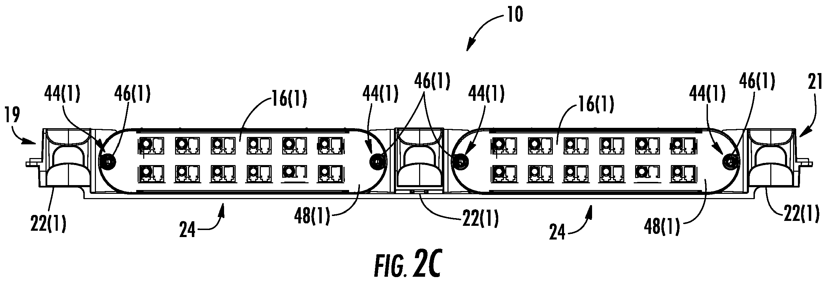

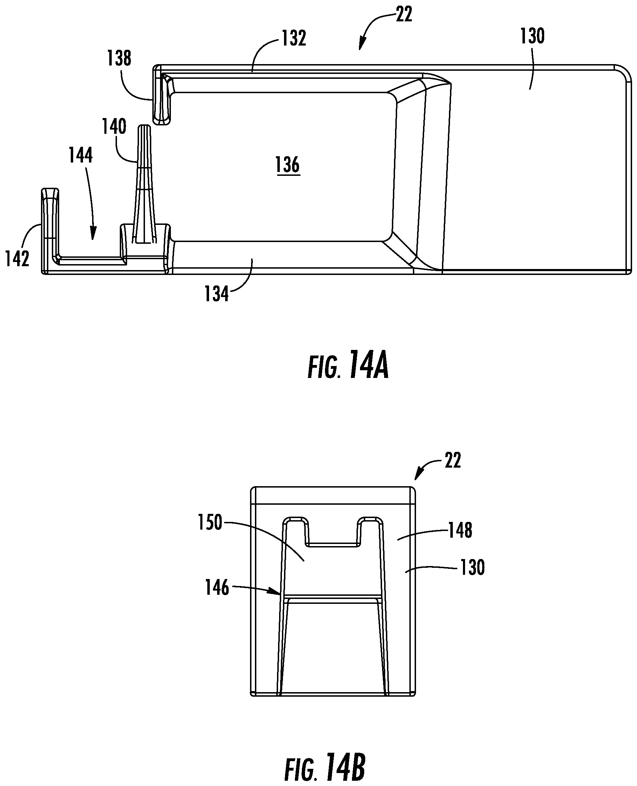

Before discussing the components that allow the stackable shelf **10** in **FIGS. 1A****-1C** to be configured to support the fiber optic equipment **14** in multiple U spaces with regard to **FIGS. 2A****-28B,** some other components that can be supported by the stackable shelf **10** and illustrated in **FIGS. 1A****-1C** are introduced. For example, as will be described below and illustrated in **FIGS. 14-15B,** removable front fiber routing guides **22(1)-22(3)** can be attached to the front stacker assemblies **18(1)-18(3)** to route optical fibers connected to the fiber optic equipment **14** in a front **24** of the mounting surface **20** supported by the stackable shelf **10.** As another example, removable and rotatable fiber routing guides **26** can be attached to the mounting surface **20** to route optical fibers connected to the fiber optic equipment **14** in a rear **28** of the fiber optic panels **16(1).** More information regarding the rotatable fiber routing guides **26** is described in related U.S. Provisional Patent Application Serial No. 61/329,898.

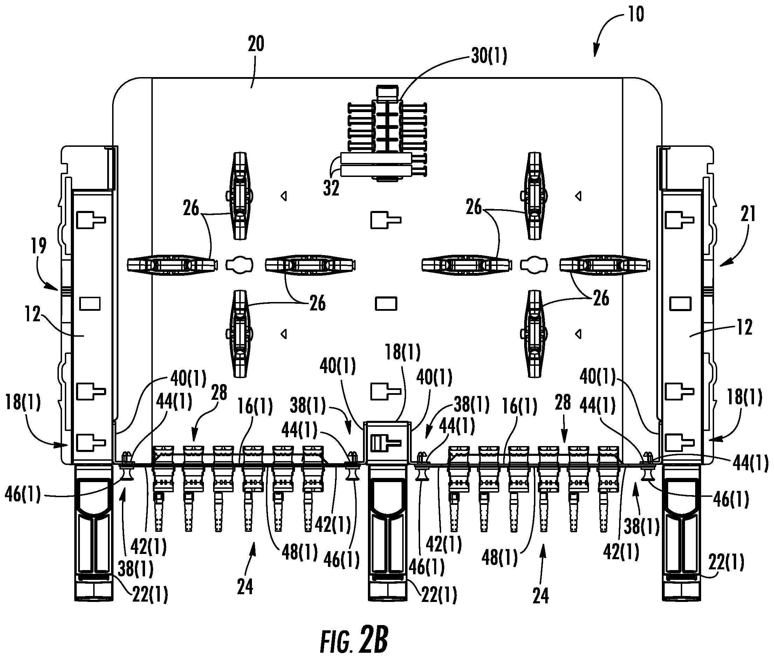

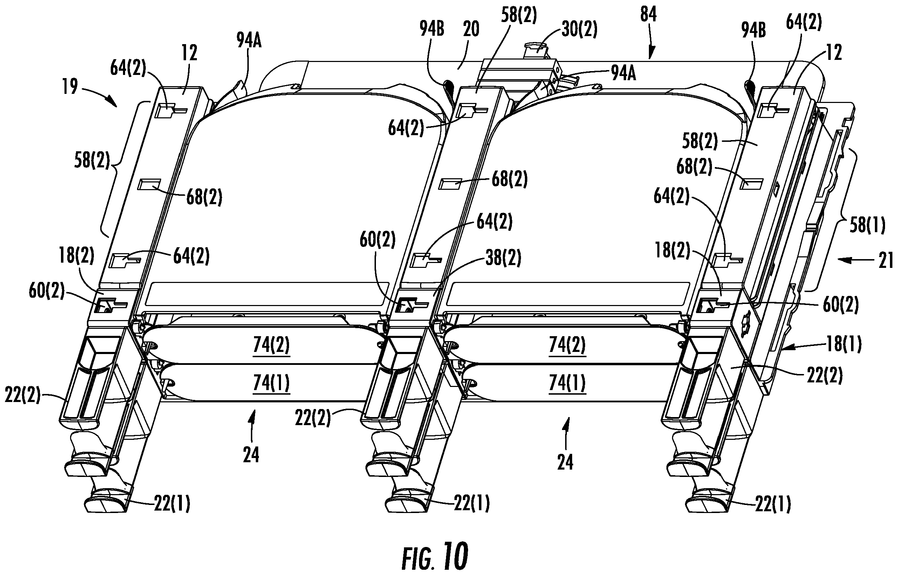

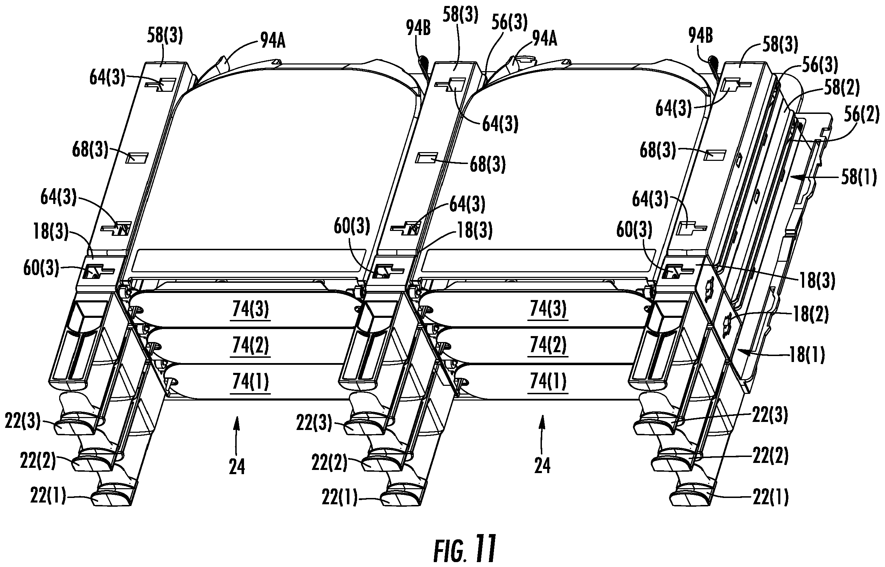

As another example that will be described in more detail below and illustrated in **FIGS. 11A-13**, fiber body holders **30(1)-30(2)** can also be provided in the stackable shelf **10.** The fiber body holders **30(1)-30(2)** are configured to support fiber bodies **32,** which may be fan-out bodies or furcation bodies, as illustrated in **FIGS. 2A**, **2B****,** and **10A**, in optical fibers connected to the rear **28** of the fiber optic equipment **14.** A first fiber body holder **30(1)** is attached to the mounting surface **20** to support the fiber bodies **32.** If desired or needed, a second fiber body holder **30(2)** is stacked on top of the first body holder **30(1)** to provide for the ability to support additional fiber bodies **32.**

**FIGS. 2A****-2C** are perspective, top, and front views, respectively, of the stackable shelf **10** in **FIGS. 1A****-1C** after the stackable shelf **10** has been configured to support fiber optic panels **16(1)** in a 1U height space. The stackable shelf **10** illustrated in **FIGS. 2A****-2D** can then be left as only support fiber optic panels **16(1)** in a 1U height space, or additional front stacker assemblies **18** (e.g., removable front stacker assemblies **18(2), 18(3)**) can be stacked on top of the front stacker assemblies **18(1)** to allow additional fiber optic panels **16** (e.g., fiber optic panels **16(2), 16(3)**) to be supported by the stackable shelf **10** in additional U height spaces about the fiber optic panels **16(1).**

**FIGS. 2A****-2D** also illustrate how the fiber optic panels **16(1)** are supported by the front stacker assemblies **18(1).** As illustrated therein, first surfaces **40(1)** of the removable panel clips **38(1)** are attached to the front stacker assemblies **18(1).** As illustrated in **FIG. 2B****,** the removable panel clips **38(1)** also include second surfaces **42(1)** with receivers **44(1)** disposed therein that are configured to receive an insert **46(1)** disposed in a front plate **48(1)** of the fiber optic panels **16(1)** to attach and retain the fiber optic panels **16(1)** to the removable panel clip **38(1).** Thus, the fiber optic panels **16(1)** are secured to the stackable shelf **10** by attaching to the removable panel clips **38(1),** which are in turn attached to the front stacker assemblies **18(1),** which are in turn attached to the mounting surface **20.** In this embodiment of the fiber optic panels **16(1),** the insert **46(1)** is comprised of a plunger for retention of the fiber optic panel **16(1)** to the removable panel clips **38(1).** However, other types of inserts **46(1)** could be employed.

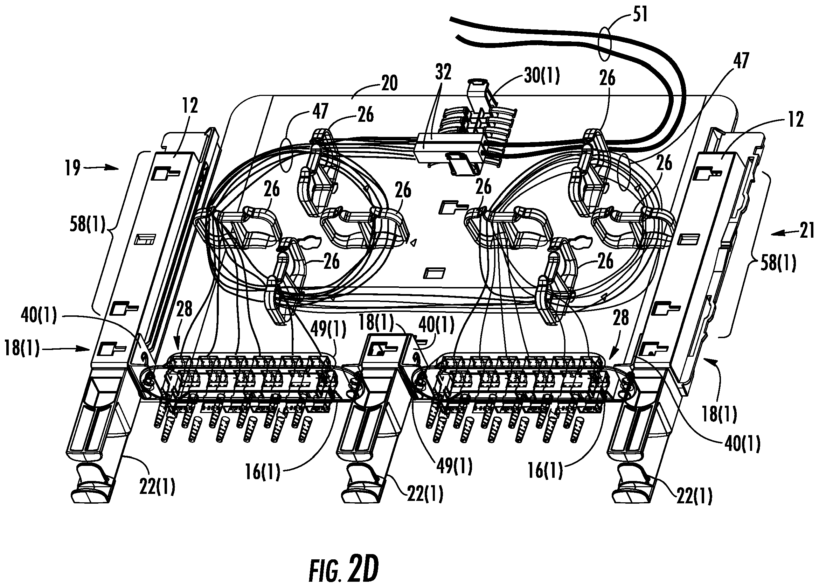

**FIG. 2D** is a perspective view of the stackable shelf **10** with optical fibers **47** routed through fiber routing guides **26** terminated to the rear **28** of fiber optic adapters **49(1)** disposed in the fiber optic panels **16(1).** The optical fibers **47** extend from the fiber bodies **32** that are installed and supported in the fiber body holder **30(1),** as also illustrated in **FIG. 2D****.** The fiber bodies **32** are connected to fiber optic cables 51 that contain the optical fibers **47.**

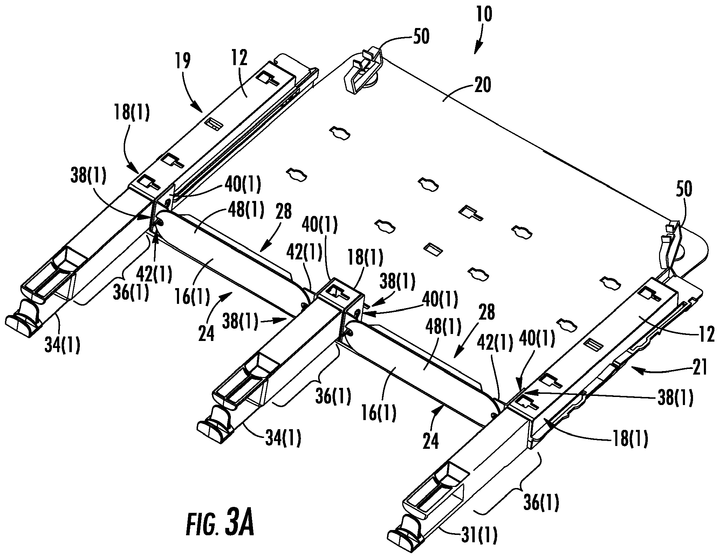

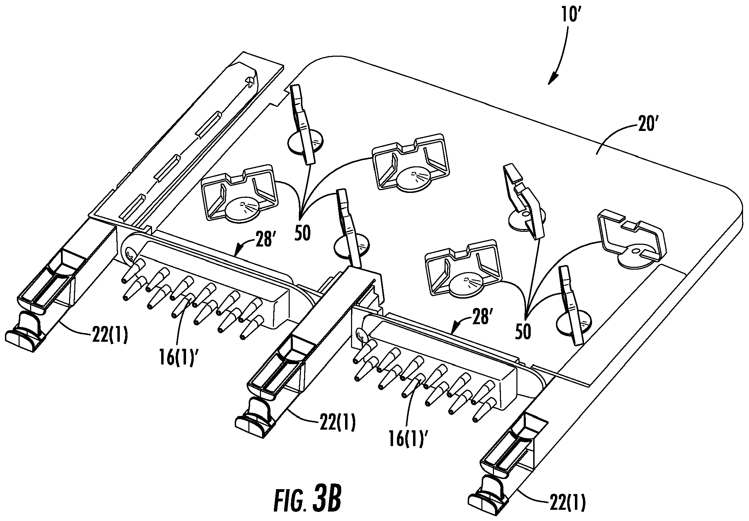

**FIG. 3A** is a perspective view of the stackable shelf **10** in **FIGS. 2A****-2D,** but configured with alternative elongated fiber routing guides **34(1)** that include elongated sections **36(1)** to extend the fiber routing guides **34(1)** farther away from the mounting surface **20.** **FIG. 3B** illustrates an alternative rotatable routing guide **50** that may be attached to a mounting surface **20'** of an alternative stackable shelf **10'** to route optical fibers connected to a rear **28'** of a fiber optic panel **16(1)'.**

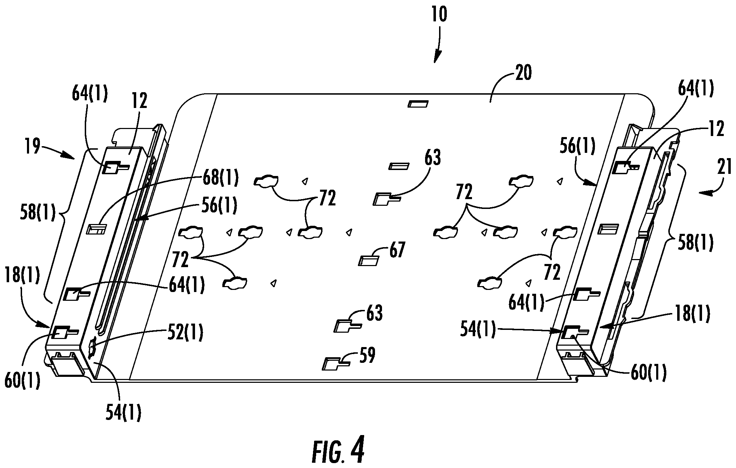

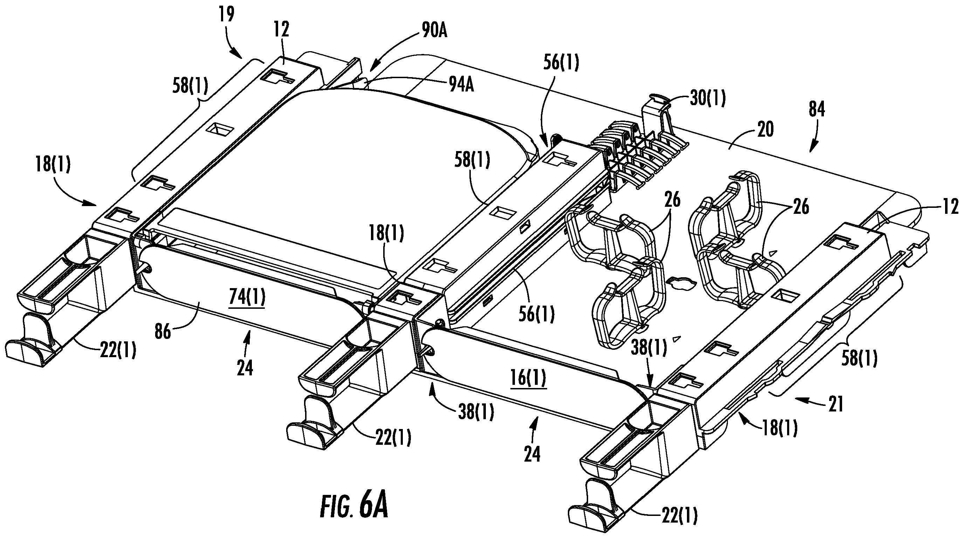

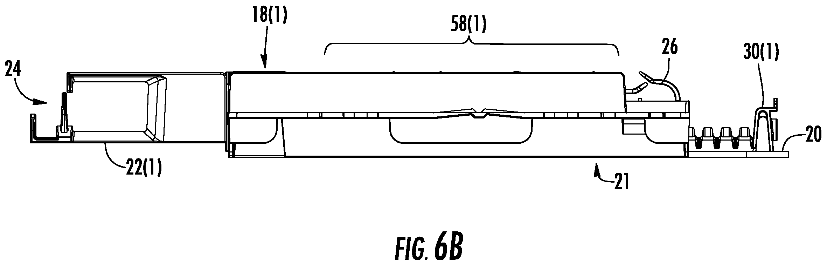

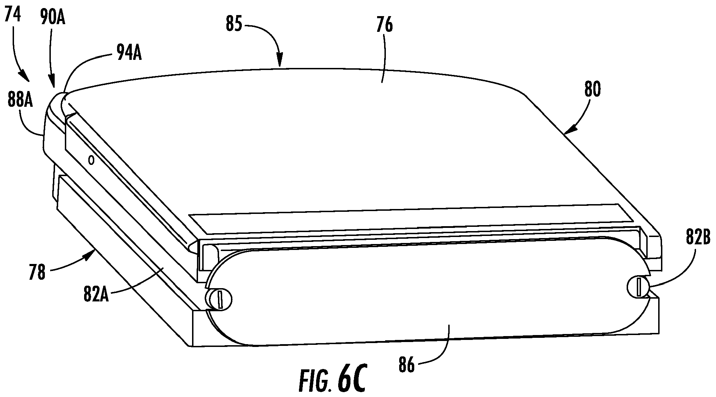

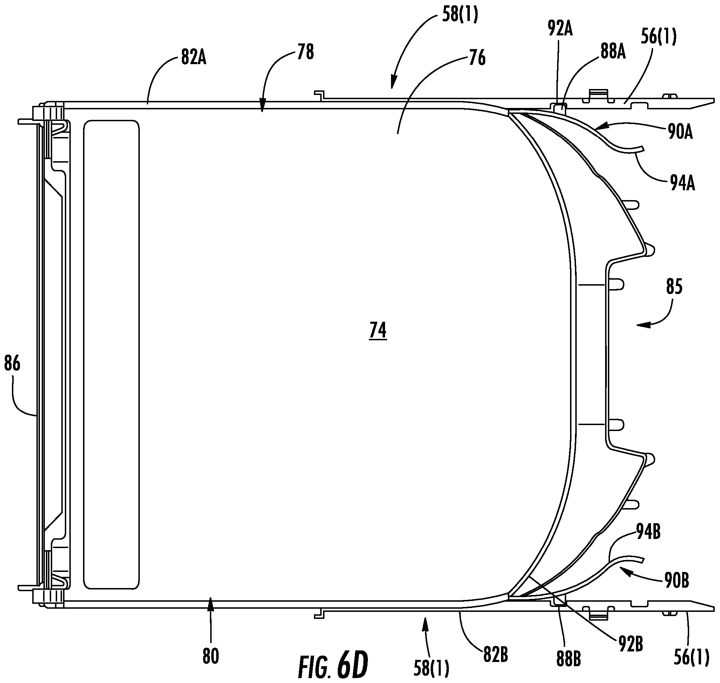

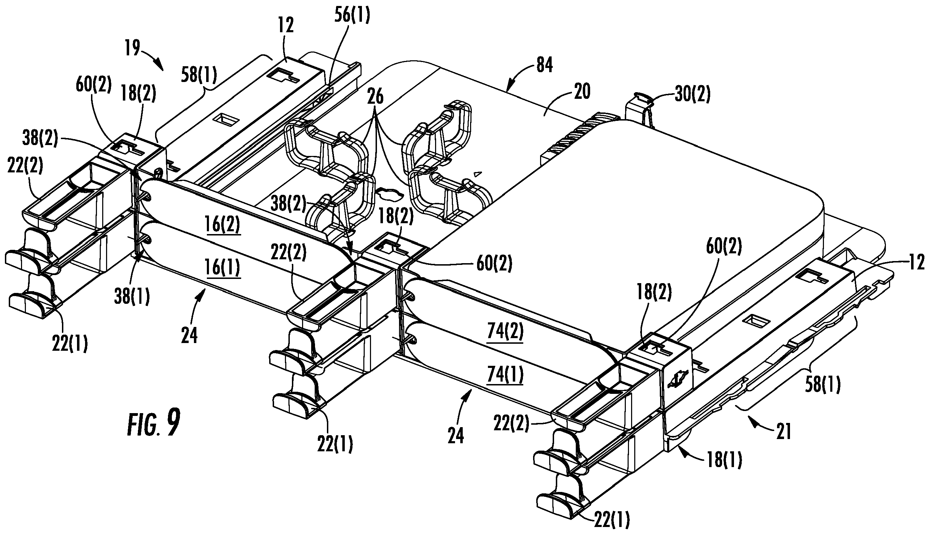

**FIG. 4** is a perspective view of the stackable shelf **10** in **FIGS. 1A****-2D** without any fiber optic equipment installed therein. **FIG. 4** is provided as a starting point to describe how stacker assemblies and related components are added and stacked on the mounting surface **20** of the stackable shelf **10** to configure the stackable shelf **10** to support fiber optic equipment of varying U height spaces. As illustrated in **FIG. 4****,** stacker assemblies **12** are integrated into the mounting surface **20.** The stacker assemblies **12** are configured to support either the fiber optic panels **16(1)** or fiber optic modules in this embodiment. To support fiber optic panels **16(1),** a receiver **52(1)** is disposed in a side **54(1)** of the front stacker assembly **18(1)** portion of the stacker assembly **12** to receive the removable panel clips **38(1)** illustrated in **FIGS. 2A****-2D.** More detail and information regarding the removable panel clips **38(1)** being attached to the front stacker assembly **18(1)** is described below and illustrated in **FIGS. 9A-10E**. If a fiber optic module(s) is desired to be supported, the removable panel clips **38(1)** are not employed. Instead, the fiber optic module(s) includes a rail guide that is configured to receive a rail **56(1)** disposed in a rear stacker assembly **58(1)** provided as a portion of the stacker assembly **12.** More information regarding installing a fiber optic module receiving the rail **56(1)** disposed in the rear stacker assembly **58(1)** to support the fiber optic module in the stackable shelf **10** is illustrated in more detail below in **FIGS. 6-7B,** **9-11** and **13A-13F.**

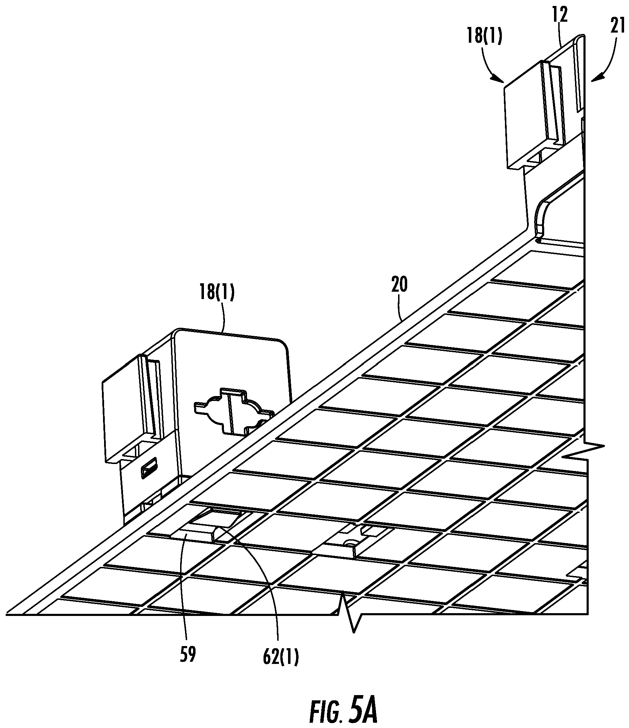

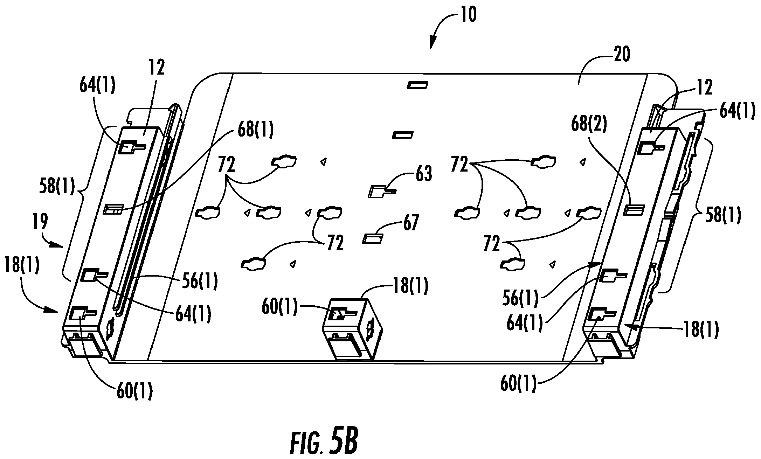

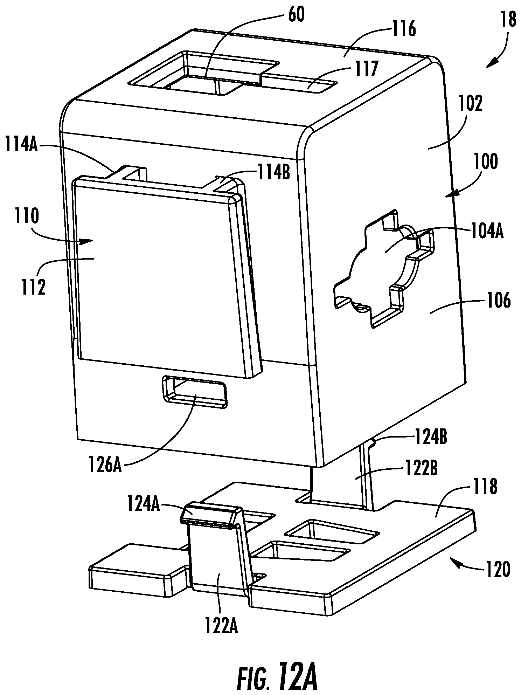

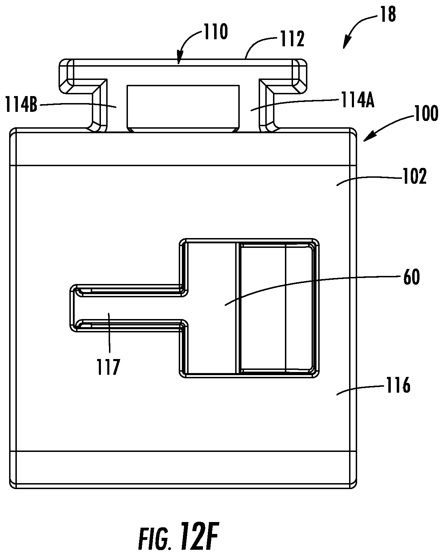

With continuing reference to **FIG. 4****,** to support attaching a front stacker assembly **18(1)** between the front stacker assemblies **18(1)** disposed on the ends **19, 21** of the mounting surface **20** to support the fiber optic panels **16(1)** in **FIGS. 1A****-2D,** the receivers **59** are disposed in the mounting surface **20.** As illustrated in **FIG. 5A** and described in more detail in **FIGS. 5A****-5B** and **12A-12F,** the bottom of the front stacker assemblies **18(1)** include a latch **62(1)** that is configured to be received and secured in the receiver **59** to attach additional front stacker assemblies **18(1)** in the mounting surface **20** to support the fiber optic panels **16(1).** An additional front stacker assembly **18(1)** attached to the mounting surface **20** is illustrated in **FIG. 5B****.**

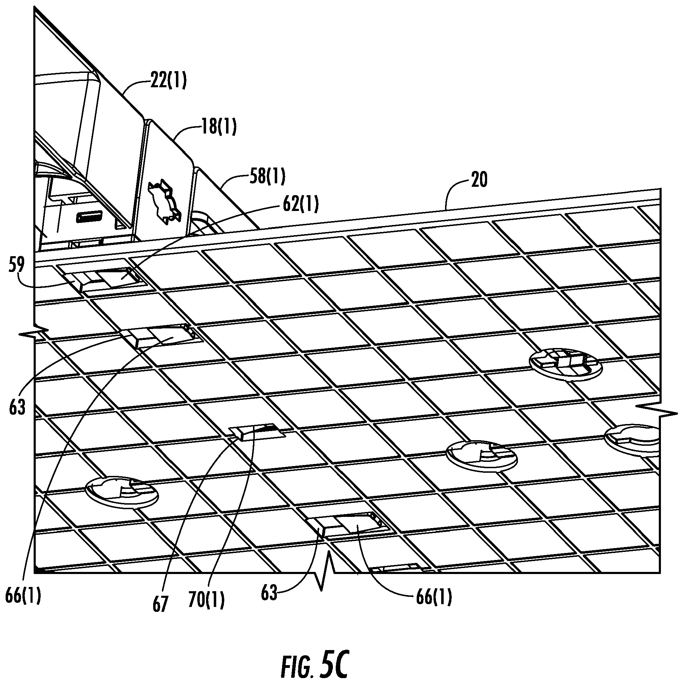

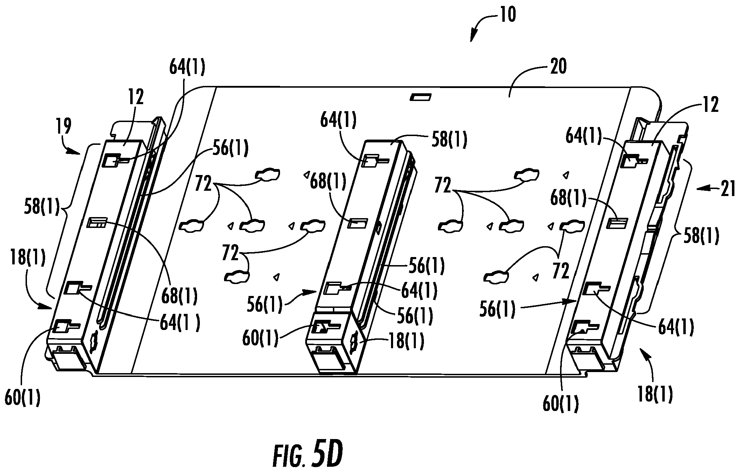

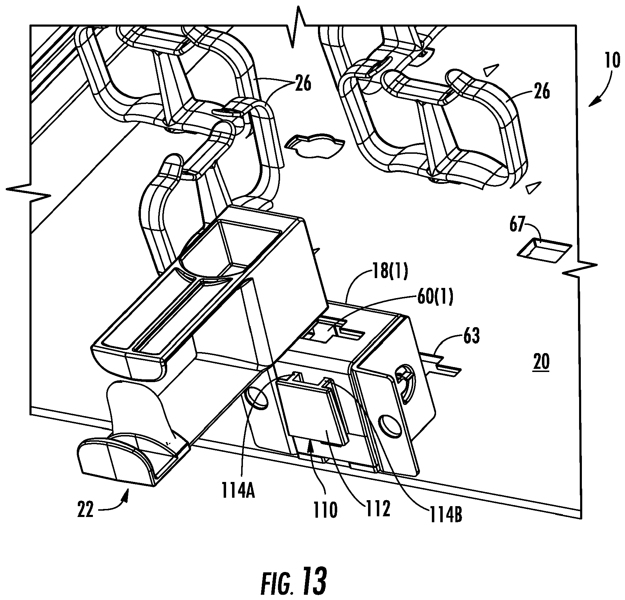

Similarly, to support attaching an additional removable rear stacker assembly 58(1) between the non-removable rear stacker assemblies **58(1)** disposed on the ends **19, 21** of the mounting surface **20** to support fiber optic modules, receivers **64(1)** are disposed in the mounting surface **20.** As illustrated in **FIG. 5C** and described in more detail in **FIGS. 13A-13F,** the bottom of the rear stacker assembly **58(1)** include latches **66(1)** that are configured to be received and secured in receivers **63** to attach an additional rear stacker assembly **58(1)** in the mounting surface **20** to support fiber optic modules. An additional receiver **67** is disposed in the mounting surface **20** to receive an additional latch **70(1)** disposed in the bottom of the rear stacker assembly **58(1).** An additional rear stacker assembly **58(1)** attached to the mounting surface **20** is illustrated in **FIG. 5D****.** Also, receivers **72** in the form of openings are disposed in the mounting surface **20** to receive the removable fiber routing guides **26** illustrated in **FIGS. 1A****-2D.**

With reference to **FIGS. 4****,** **5B****,** and **5D****,** to support allowing stacking additional front stacker assemblies **18** on top of the front stacker assemblies **18(1)** to support additional fiber optic panels **16** at U height spaces above the U height space of the stacker assemblies **12** (e.g., fiber optic panels **16(2)** and **16(3)** in **FIGS. 1A****-1C),** receivers **60(1)** are also disposed in the top of the front stacker assemblies **18(1).** As illustrated in **FIG. 5A****,** the latch **62** disposed in the bottom of the front stacker assembly **18(1)** is configured to be received and secured in the receivers **60(1)** to support stacking additional front stacker assemblies **18** on top of the front stacker assembly **18(1).**

Similarly, to support stacking additional rear stacker assemblies **58** on top of the rear stacker assemblies **58(1)** to support additional fiber optic modules at U height spaces above the U height space of the stacker assemblies **12,** receivers **64(1)** are disposed in the top of the rear stacker assemblies **58(1).** In this embodiment, the receivers **64(1)** are of the same design as the receivers **60(1).** As illustrated in **FIG. 5C****,** the bottom of the rear stacker assemblies **58** include the latches **66(1)** that are configured to be received and secured in the receivers **64(1)** to support stacking additional rear stacker assemblies **58** on top of the rear stacker assembly **58(1).** An additional receiver **68(1) is** also disposed in the rear stacker assemblies **58(1)** configured to receive an additional latch **70,** as illustrated in **FIG. 5C****,** disposed in the bottom of the rear stacker assemblies **58** stacked on top of the rear stacker assembly **58(1).** In this embodiment, the additional receiver **70(1)** is of a different design from the receivers **60(1), 64(1).**

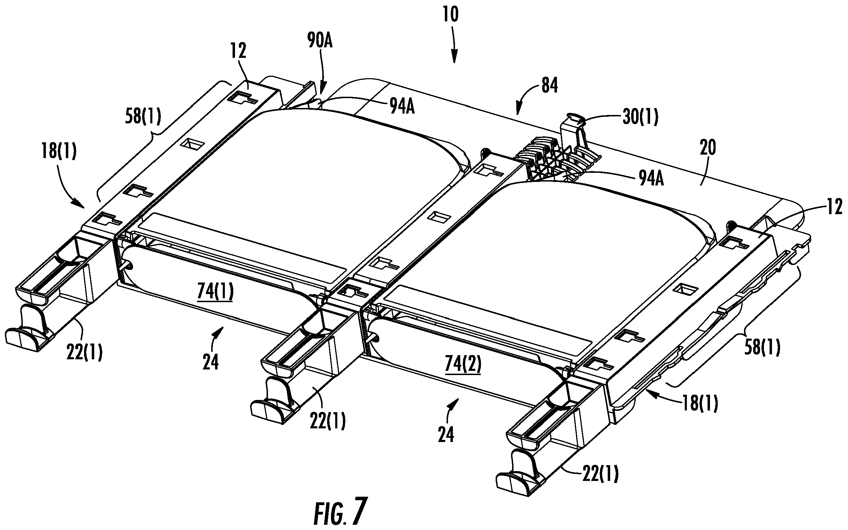

**FIG. 6A** and **6B** are perspective and side views, respectively, of the stackable shelf **10** in **FIGS. 1A****-2D** including front stacker assemblies **18(1)** and rear stacker assemblies **58(1)** installed in the stackable shelf **10.** The stackable shelf **10** is supporting both a fiber optic panel **16(1)** and a fiber optic module **74(1)** illustrated in **FIGS. 6C** and **6D** in the same height space. **FIG. 7** is a perspective view of the stackable shelf **10** in **FIGS. 1A****-2D** including front stacker assemblies **18(1)** and rear stacker assemblies **58(1)** installed in the stackable shelf **10** supporting two (2) fiber optic modules **74(1), 74(2)** in the same height space.

As illustrated in the front perspective and top views of the fiber optic module **74** in **FIGS. 6C** and **6D****,** respectively, the fiber optic module **74** includes a housing **76** that includes a first end **78** and a second end **80.** Rails guides **82A, 82B** are disposed in the housing **76** on the first end **78** and the second end **80** of the housing **76,** respectively. Thus, when a rear portion **85** of the fiber optic module **74** is inserted between rear stacker assemblies **58(1)** from the front **24** of the mounting surface **20,** the rail guides **82A, 82B** of the fiber optic module **74** are aligned with the rails **56(1)** in the rear stacker assemblies **58(1).** As illustrated in **FIGS. 6A****,** **6D****,** and **7****,** the rail guides **82A, 82B** receive the rails **56(1).** The fiber optic module **74** can be slid back from the front **24** of the mounting surface **20** to a rear **84** of the mounting surface **20,** as illustrated in **FIG. 6A****,** until a front side **86** of the fiber optic module **74** is located adjacent to the front stacker assembly **18(1)** on the ends **19,21** of the mounting surface **20.**

As illustrated in **FIG. 6D****,** the fiber optic module **74** can be locked into place in the rails **56(1)** by protrusions **88A, 88B** provided in a latching system **90A, 90B** disposed in the rail guides **82A, 82B,** respectively. As illustrated in **FIG. 6D****,** the protrusions **88A, 88B** are each configured to be secured into notches **92A, 92B** disposed in the rails **56(1)** to lock the fiber optic module **74** about the rear stacker assemblies **58(1).** When it is desired to release the fiber optic module **74** from the rear stacker assemblies **58(1),** latches **94A, 94B** can be pushed inward toward the fiber optic module **74** to release the protrusions **88A, 88B** from the notches **92A, 92B,** respectively, to allow the rail guides **82A, 82B** of the fiber optic module **74** to be moved about the rails **56(1)** of the rear stacker assemblies **58(1).**

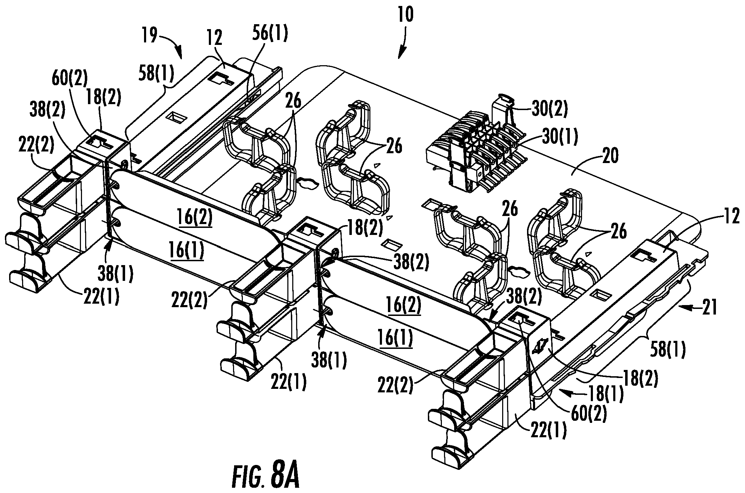

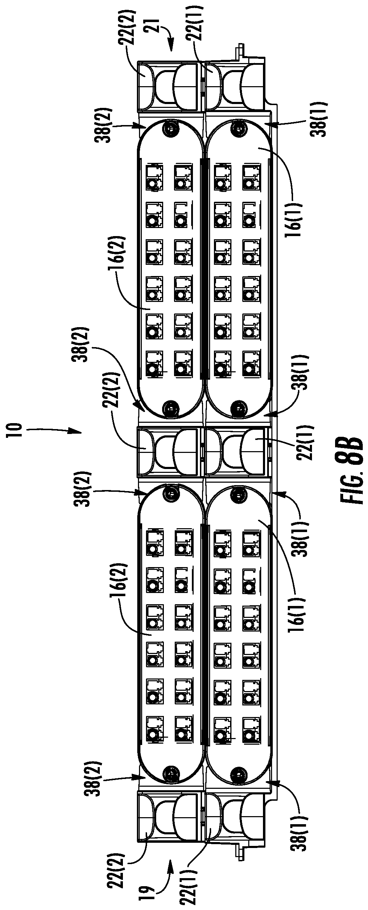

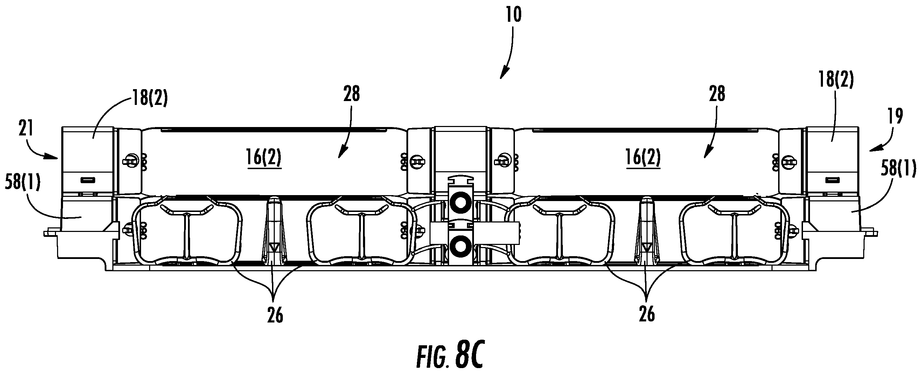

As previously discussed, providing the front stacker assemblies **18** and rear stacker assemblies **58** allows the stackable shelf **10** to be configured in a stacked arrangement to support fiber optic equipment at multiple height spaces as needed or desired. One example of this arrangement is illustrated in **FIGS. 8A****-8C.** **FIGS. 8A****-8C** are perspective, front, and rear views, respectively, of the stackable shelf **10** in **FIGS. 1A****-2D** including additional front removable stacker assemblies **18(2)** stacked on top of the front stacker assemblies **18(1)** to support additional fiber optic panels **16(2)** stacked over fiber optic panels **16(1)** in a 2U height space. **FIG. 9** is a perspective view of the stackable shelf **10** in **FIGS. 1A****-2D** including additional front removable stacker assemblies **18(2)** stacked on top of the front stacker assemblies **18(1)** to support an additional fiber optic panel **16(2)** stacked over the fiber optic panel **16(1)** and an additional fiber optic module **74(2)** stacked over the fiber optic module **74(1)** in a 2U height space. **FIG. 10** is a perspective view of the stackable shelf **10** in **FIGS. 1A****-2D** including additional rear removable stacker assemblies **58(2)** stacked on top of the rear stacker assemblies **58(1)** to support additional fiber optic modules **74(2)** stacked over the fiber optic modules **74(1)** in a 2U height space. Thus, in these configurations, the stackable shelf **10** is configured for providing fiber optic equipment in a 2U height space for a 2U fiber optic housing.

In **FIGS. 8A****-8C** and **9,** the removable panels clips **38(1), 38(2)** previously described are employed to secure the fiber optic panels **16(1), 16(2)** to the front stacker assemblies **18(1), 18(2),** respectively. More information regarding stacking of front stacker assemblies **18** on top of other front stacker assemblies **18** to support additional fiber optic equipment at additional height spaces in the stackable shelf **10,** such as front stacker assemblies **18(2)** stacked on top of the front stacker assemblies **18(1)** in **FIGS. 8A****-8C,** is described below and illustrated in **FIGS. 12A****-12F.**

**FIG. 11** is a perspective view of the stackable shelf **10** in **FIGS. 1A****-2D** including additional rear removable stacker assemblies **58(2)** stacked on top of the rear stacker assemblies **58(1),** and rear removable stacker assemblies **58(3)** stacked on top of the rear stacker assemblies **58(2)** to support additional fiber optic modules **74(3), 74(2)** stacked over the fiber optic modules **74(1)** in a 3U height space. Thus, in this configuration, the stackable shelf **10** is configured for providing fiber optic equipment in 3U height space for a 3U fiber optic housing.

**FIGS. 12A****-12F** are a perspective exploded, assembled perspective, front, side, top, and bottom views, respectively, of the front stacker assembly **18.** The front stacker assembly **18** illustrated in **FIGS. 12A****-12F** is shown as a removable stacker assembly **18** that can be attached and removed to the mounting surface **20** and/or on top of other front stacker assemblies **18.** However, the design features in the front stacker assembly **18** illustrated in **FIGS. 12A****-12F** could also be employed in a front stacker assembly **18** that is not removable and disposed permanently on the mounting surface **20** of the stackable **shelf 10,** as illustrated in **FIG. 4****.**

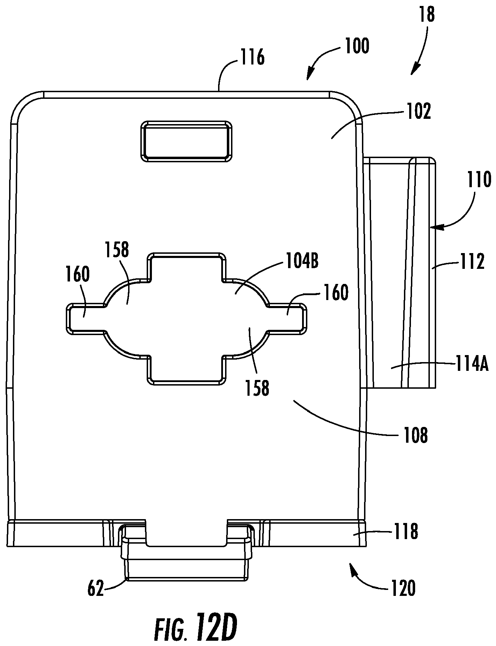

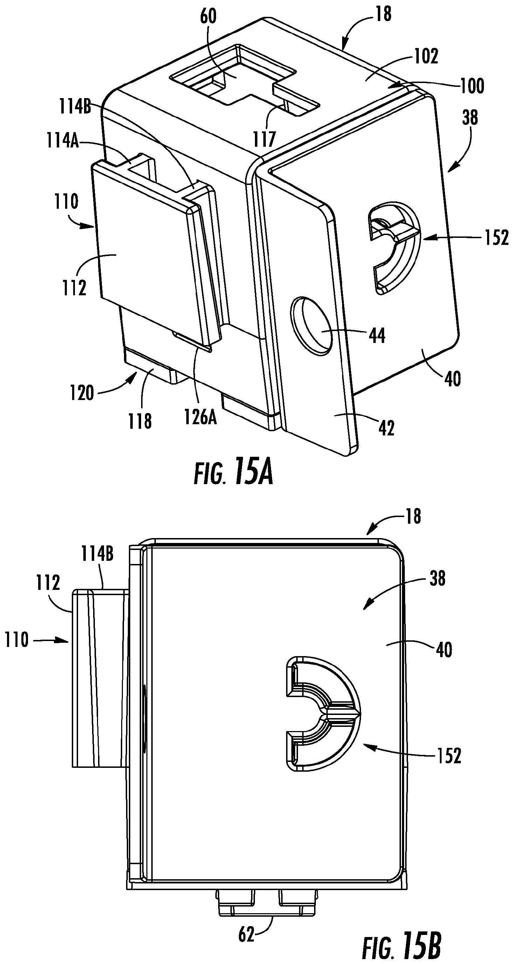

As illustrated **FIGS. 12A****-12F,** the front stacker assembly **18** includes a support member **100.** The support member **100** is comprised of a support body **102.** The receiver **60** previously described with regard to **FIGS. 4****,** **5B****,** and **5D** is disposed in the support body **102.** A first receiver **104A** comprised of an opening in this embodiment is disposed in a first side **106** of the support body **102** and is configured to support fiber optic equipment in the stackable shelf **10.** A second receiver **104B (****FIG. 12D****)** comprised of a second opening in this embodiment is disposed in a second side **108** of the support body **102,** and is also configured to support fiber optic equipment in the stackable shelf **10.** For example, as previously discussed and discussed in more detail below with regard to **FIGS. 15A****-16E,** the removable panel clips **38** can be attached to the first and second receivers **104A, 104B** in the support body **102** so that fiber optic panels **16** can be secured to the removable panel clips **38.** In turn, the fiber optic panels **16** attached to the removable panel clips **38** are then secured to the support body **102** of the front stacker assembly **18.**

With continuing reference to **FIGS. 12A****-12F,** a fiber routing guide receiver **110** is also disposed in the support body **102.** The fiber routing guide receiver **110** is comprised of a platform **112** raised from the surface of the support body **102** by two (2) support members **114A, 114B.** The fiber routing guide receiver **110,** and more particularly, the platform **112,** is configured to receive the front fiber routing guide **22,** as described in more detail below and illustrated in **FIGS. 13-14B.**

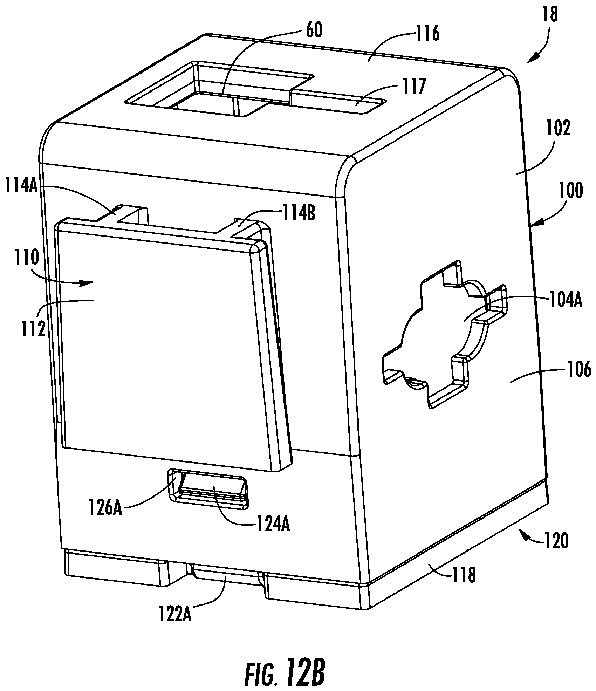

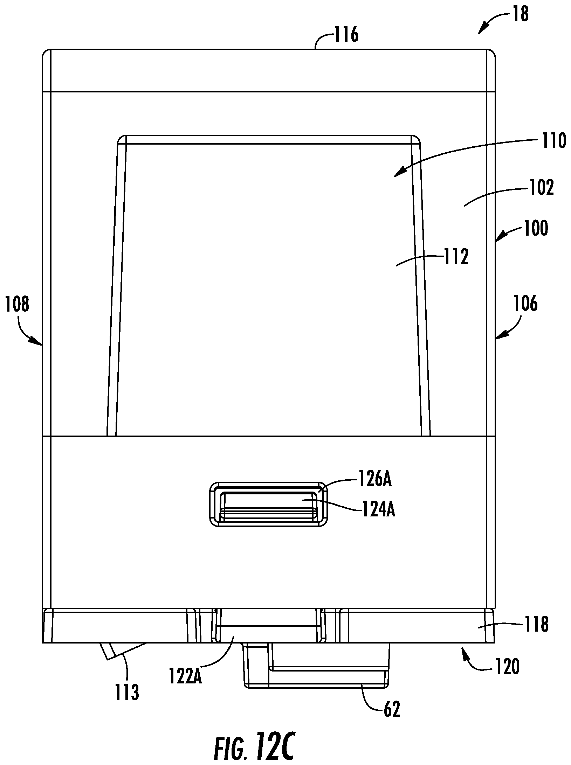

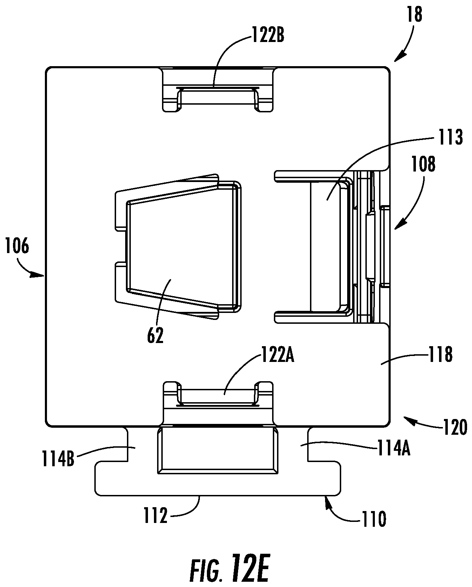

With continuing reference to **FIGS. 12A****-12F,** the receiver **60** previously discussed is disposed in a top side **116** of the support body **102.** The receiver **60** contains a keyed portion **117.** The receiver **60** is configured to receive the latch **62,** previously described and illustrated in **FIG. 5A**, and illustrated in **FIGS. 12C****-12F.** The latch **62** in this embodiment is disposed in an attachment body **118** of an attachment member **120** configured to receive the support body **102** as illustrated in **FIG. 12A****,** and as assembled in **FIG. 12B****.** To secure the latch **62** to the receiver **60,** a locking feature **113** as illustrated in **FIGS. 12C** and **12E****,** is first inserted into the receiver **60** and slid underneath the receiver **60.** tAs a result, the latch **62** is inserted into the receiver **60** and slid about the receiver **60** into the keyed portion **117** to be secured to the support body **102.** In this scenario, the latch **62** can be disposed in the receiver **60** in the top side **116** of the support body **102** of the front stacker assembly **18** to allow one front stacker assembly **18** to be stacked on top of another front stacker assembly **18** to allow the stackable shelf **10** to be configured to support fiber optic equipment at additional height spaces above a 1-U height space, as desired or needed. This configuration also allows the front stacker assembly **18** to be secured to the mounting surface **20,** as previously discussed with regard to **FIG. 5A**, wherein the latch **62** is disposed in the receiver **59** in the mounting surface **20** to support fiber optic equipment in the first 1-U height space from the mounting surface **20.**

With reference to **FIGS. 12A** and **12B****,** the attachment body **118** is provided as a separate component configured to be secured to the support body **102.** In this regard, latches **122A, 122B** are disposed in the attachment body **118,** as illustrated in **FIG. 12A****.** The latches **122A, 122B** contain extension members **124A, 124B** that are configured to be bent inward as the support body **102** is disposed over top the attachment body **118.** The energy stored in the extension members **124A, 124B** will eventually cause the extension members **124A, 124B** to extend outward into openings **126A, 126B** to secure the support body **102** to the attachment body **118,** as illustrated in **FIG. 12B****.**

**FIG. 13** is a perspective view of the exemplary front fiber routing guide **22** in **FIGS. 1A****-2D** positioned to be secured to the front stacker assembly **18** in **FIGS. 12A-****12F** installed in the stackable shelf **10** of **FIG. 4****.** More particularly, the front fiber routing guide **22** is configured to be secured to the fiber routing guide receiver **110** comprised of the platform **112** raised from the surface of the support body **102** by the support members **114A, 114B,** as illustrated in **FIGS. 12A****-12F** and described above. Although not illustrated in **FIG. 13****,** the fiber routing guide receiver **110** is also configured to receive and secure the elongated fiber routing guides **34** illustrated in **FIGS. 3A** and **3B****.**

**FIGS. 14A** and **14B** are side and rear views, respectively, of the front fiber routing guide **22** that is configured to be attached to the front stacker assembly **18** illustrated in **FIG. 13****.** As illustrated in **FIG. 14A****,** the front fiber routing guide **22** is comprised of a routing guide body **130.** Two (2) extension members **132, 134** extend from the routing guide body **130** such that a retention area **136** is created therebetween for optical fibers to be retained. The extension member **132** contains an end extension **138** and the extension member **134** contains a retainer **140,** respectively, to retain optical fibers in the retention area **136.** The end extension **138** and the retainer **140,** for example a flap, are not closed so that optical fibers can be disposed therebetween into the retention area **136.** An additional extension member **142** is also provided to allow the stackable shelf **10** to be pulled out with an additional area **144** to provide for finger access.

To attach the front fiber routing guide **22** to the platform **112** on the front stacker assembly **18** as illustrated in **FIG. 13****,** a receiver **146** is disposed in a rear side **148** of the front fiber routing guide **22,** as illustrated in **FIG. 14B****.** The receiver **146** is comprised of a hood **150** that is configured to be slipped over a top portion of the platform **112** of the fiber routing guide receiver **110.** The front fiber routing guide **22** can be removed from the front stacker assembly **18** by pulling up on the front fiber routing guide **22** such that the hood **150** is lifted off of the platform **112** of the fiber routing guide receiver **110** to clear the front fiber routing guide **22** from the front stacker assembly **18.**

As previously discussed with regard to **FIG. 3A**, the front stacker assembly **18** is also configured to support the removable panel clip **38** to allow fiber optic panels **16** to be secured to the front stacker assembly **18** and thus supported by the stackable shelf **10.** The removable panel clip **38** allows fiber optic panels **16** and fiber optic modules **74** to be supported interchangeably in the stacked shelf **10** in this embodiment. In this regard, **FIGS. 15A** and **15B** are perspective and side views, respectively, of the front stacker assembly **18** in **FIGS. 12A****-12F** with the removable panel clip **38** secured thereto to support securing fiber optic panels **16** to the stackable shelf **10** in **FIG. 4****.**

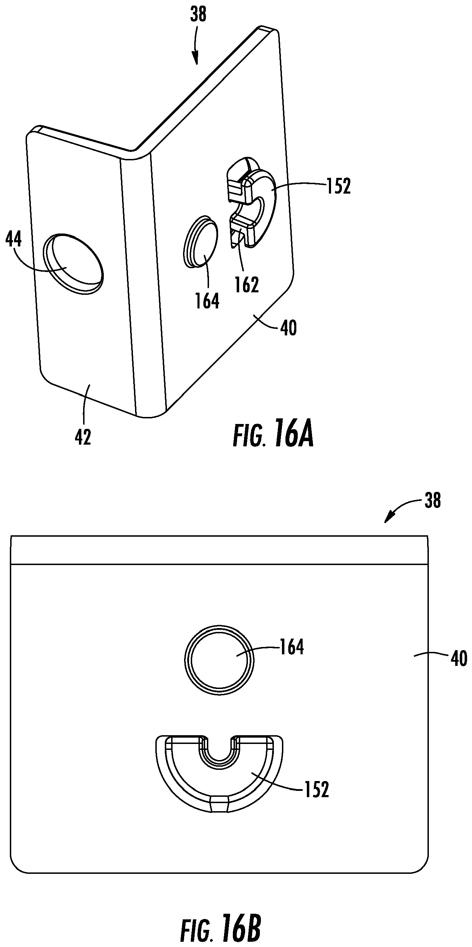

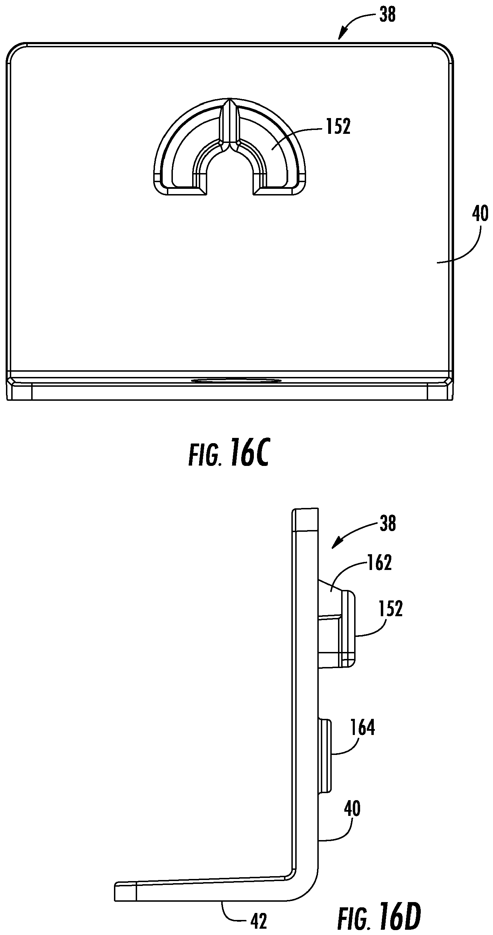

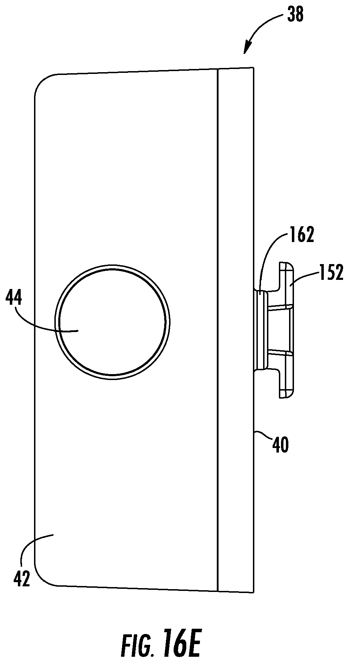

As illustrated in **FIGS. 15A****-16E,** the removable panel clip **38** includes a flange **152.** The flange **152** is configured to be inserted into the receiver **104A** or **104B** of the front stacker assembly **18 (****FIGS. 12A** and **12D****)** to attach the removable panel clip **38** to the front stacker assembly **18.** The flange **152** in this embodiment is arcuate-shaped, but other shapes can be provided, including but not limited to semi-circular and circular. The flange **152** is disposed in the first surface **40** of the removable panel clip **38** (see also **FIGS. 2A**-**2C**). The receiver **44** disposed in the second surface **42** to the first surface **40** of the removable panel clip **38** is configured to receive the insert **46** of a fiber optic panel **16,** as illustrated in **FIGS. 2A****-2C.** The first surface **40** is orthogonal to the second surface **42** in this embodiment. The flange **152** is configured to be inserted in a first area **158** of the receiver **104A** or **104B** and slid into a second area **160** of the receiver **104A** or **104B,** as illustrated in **FIG. 12D****,** to attach the removable panel clip **38** to the front stacker assembly **18.** A standoff or extender **162 (****FIG. 16A****)** is disposed between the flange **152** and the first surface **40** to extend the flange **152** a distance away from the first surface **40** so the flange **152** can be inserted into the receiver **104A** or **104B** in the front stacker assembly **18.** The flange **152** can then be slid behind the second area **160** of the receiver **104A** or **104B,** which has an opening size less than the size of the flange **152.**

The flange **152** cannot be removed from the receiver **104A** or **104B** unless and until the flange **152** is slid back to the first area **158** of the receiver **104A** or **104B,** which has an opening size that will allow the flange **152** to be removed from the receiver **104A** or **104B.** A protrusion **164** is also disposed in the first surface **40** of the removable panel clip **38** to be disposed into the second area **160** of the receiver **104A** or **104B** to further secure the removable panel clip to the removable stacker assembly **18.**

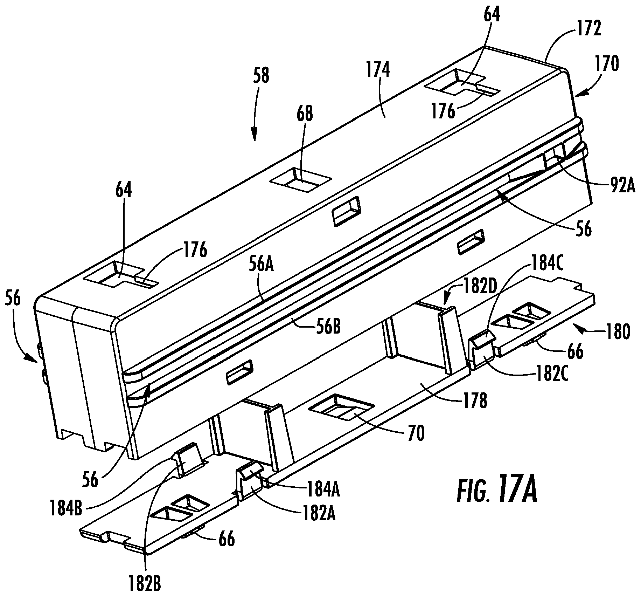

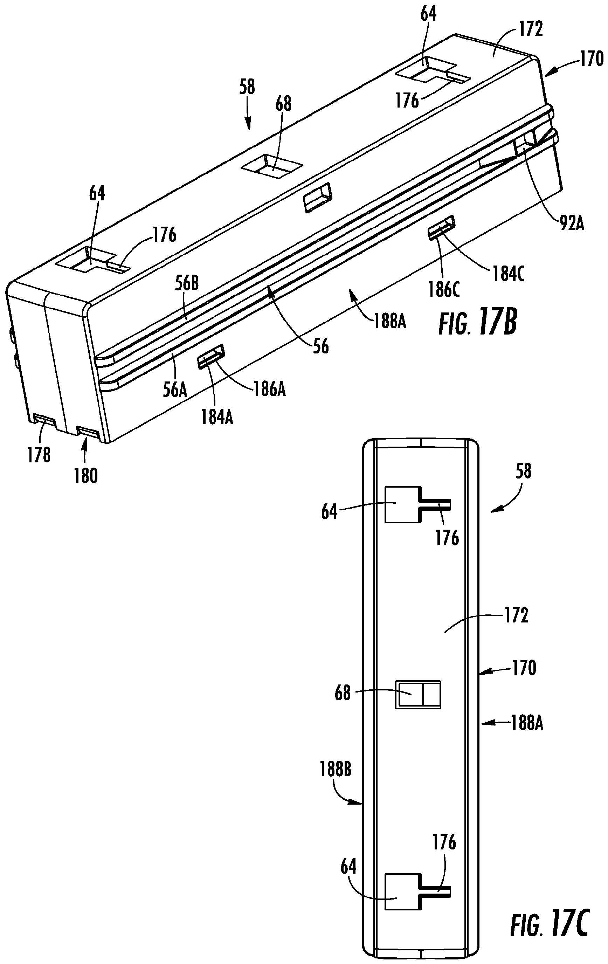

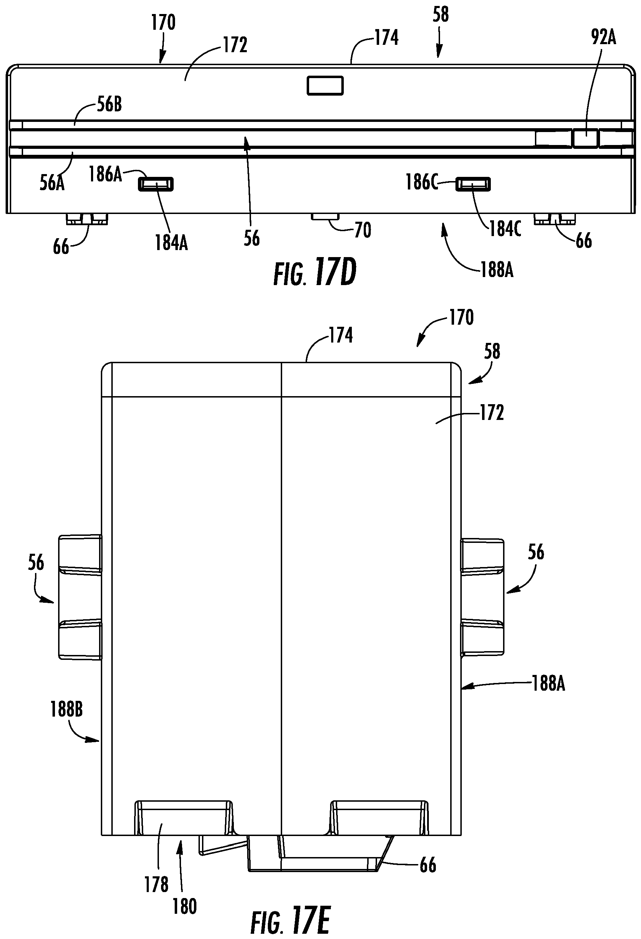

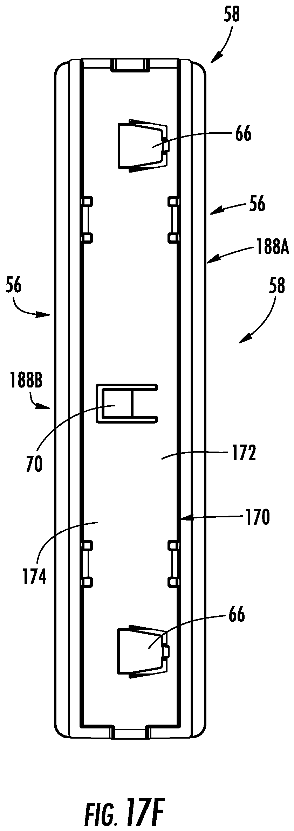

**FIGS. 17A****-17F** are exploded perspective, assembled perspective, top, side, front, and bottom views, respectively, of the rear stacker assembly **58.** The rear stacker assembly **58** illustrated in **FIGS. 17A****-17F** is shown as a removable rear stacker assembly **58** that can be attached to and removed from the mounting surface **20** and/or on top of other rear stacker assemblies **58.** However, the design features in the rear stacker assembly **58** illustrated in **FIGS. 17A****-17F** could also be employed in a rear stacker assembly **58** that is not removable and disposed permanently on the mounting surface **20** of the stackable shelf **10,** as illustrated in **FIG. 4****.**

As illustrated **FIGS. 17A****-17F,** the rear stacker assembly **58** includes a support member **170.** The support member **170** is comprised of a support body **172.** The receivers **64, 67** in the form of openings in this embodiment and previously described with regard to **FIGS. 5A****-5D** are disposed in the support body **172.** The receivers **64, 67** are disposed in a top side **174** of the support body **172.** As illustrated in **FIGS. 17A****-17C,** the receivers **64** contain keyed portions **176.** The receivers **64, 67** are configured to receive the latches **66, 70,** respectively, previously described and illustrated in **FIGS. 5A-****5D,** and illustrated in **FIGS. 17A** and **17D****-17E.** The latches **66, 70** in this embodiment are disposed in an attachment body **178** of an attachment member **180** configured to receive the support body **172** as illustrated in **FIG. 17A****,** and as assembled in **FIG. 17B****.** The latches **66** are inserted into the receivers **64** and slid about the receivers **64** into the keyed portions **176** to be secured to the support body **172.** In this scenario, the latches **66** can be disposed in the receivers **64** in the top side **174** of the support body **172** to allow one rear stacker assembly **58** to be stacked on top of another rear stacker assembly **58** to allow the stackable shelf **10** to be configured to support fiber optic equipment at additional height spaces about a 1-U height space, as desired or needed. This configuration also allows the rear stacker assembly **58** to be secured to the mounting surface **20,** as previously discussed with regard to **FIG. 5C****,** wherein the latches **66** are disposed in the receivers **63** in the mounting surface **20** to support fiber optic equipment in the first 1-U height space from the mounting surface **20.**

With reference to **FIGS. 17A** and **17B****,** the attachment body **178** is provided as a separate component configured to be secured to the support body **172.** In this regard, latches **182A-182D** are disposed in the attachment body **178,** as illustrated in **FIG. 17A****.** The latches **182A-182D** contain protrusion members **184A-184D** that are configured to be bent inward as the support body **172** is disposed over top the attachment body **178.** The protrusion members **184A-184D** are resilient such that they provide biasing, thus eventually causing the extension members **184A-184D** to extend outward into openings **186A-186D** to secure the support body **172** to the attachment body **178,** as illustrated in **FIG. 17B****.**

As previously discussed with regard to **FIGS. 6A****-6D,** and as illustrated in **FIGS. 12A****-12F,** rails **56** disposed on each side **188A, 188B** in the rear stacker assembly **58** are configured to receive the rail guides **82A, 82B** disposed in the housing **76** the fiber optic module **74** to support the fiber optic module **74** between two (2) adjacent rear stacker assemblies **58.** In this embodiment of the rear stacker assembly **58,** the rails **56** are comprised of two sub-rails **56A, 56B,** whose combined width is configured to be received inside the rail guides **82A, 82B** of the fiber optic module **74.** A solid rail could alternatively be employed as the rail **56.** Employing the sub-rails **56A, 56B** reduces material and weight of the rear stacker assemblies **58.**

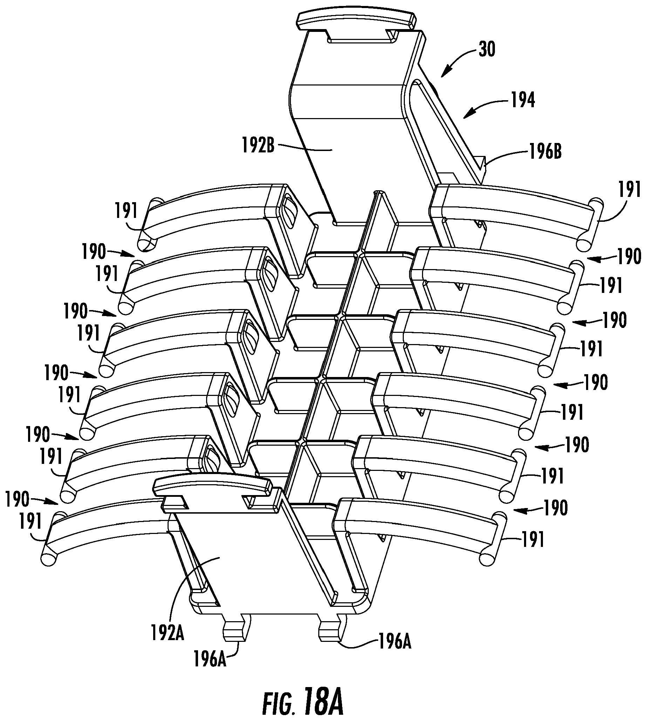

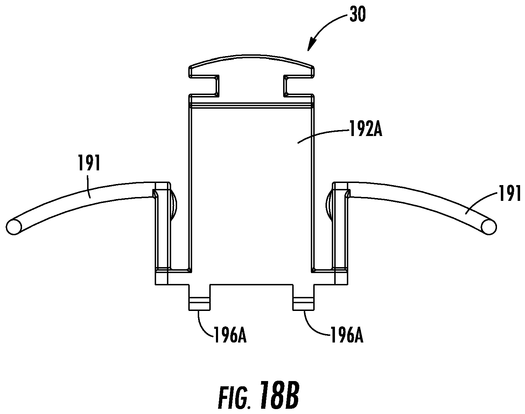

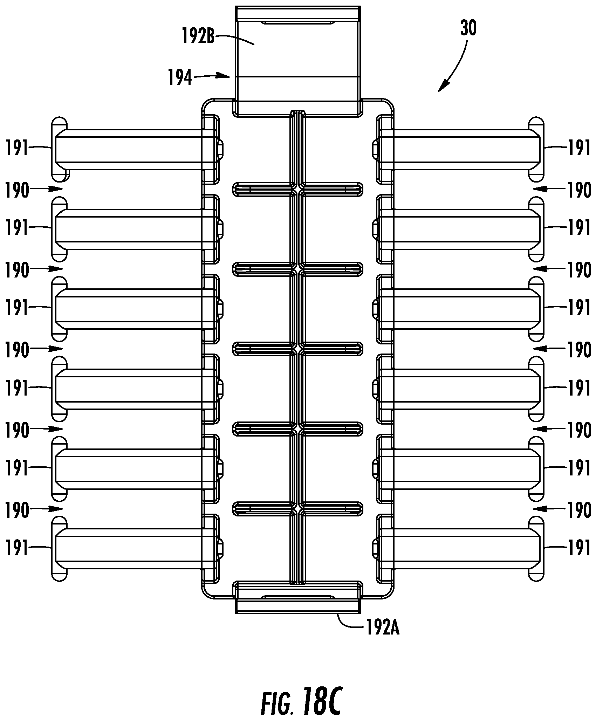

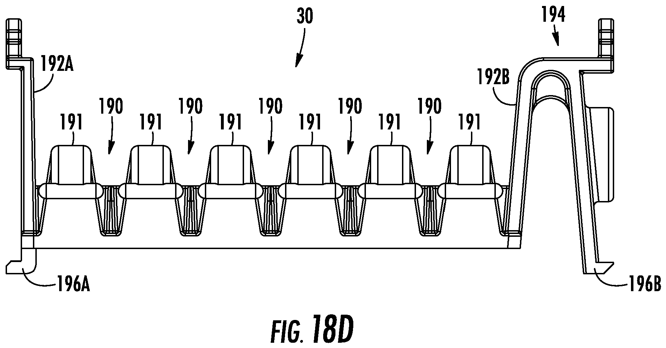

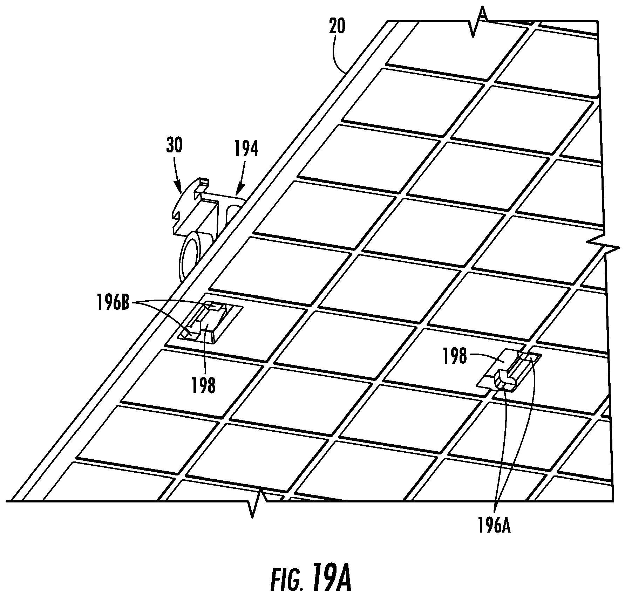

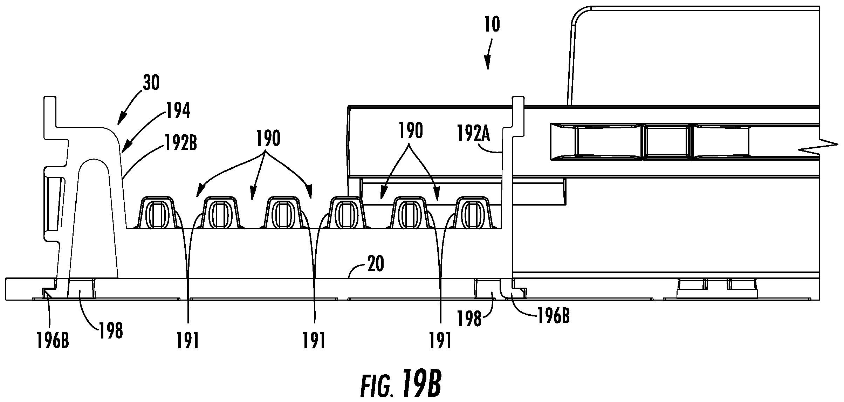

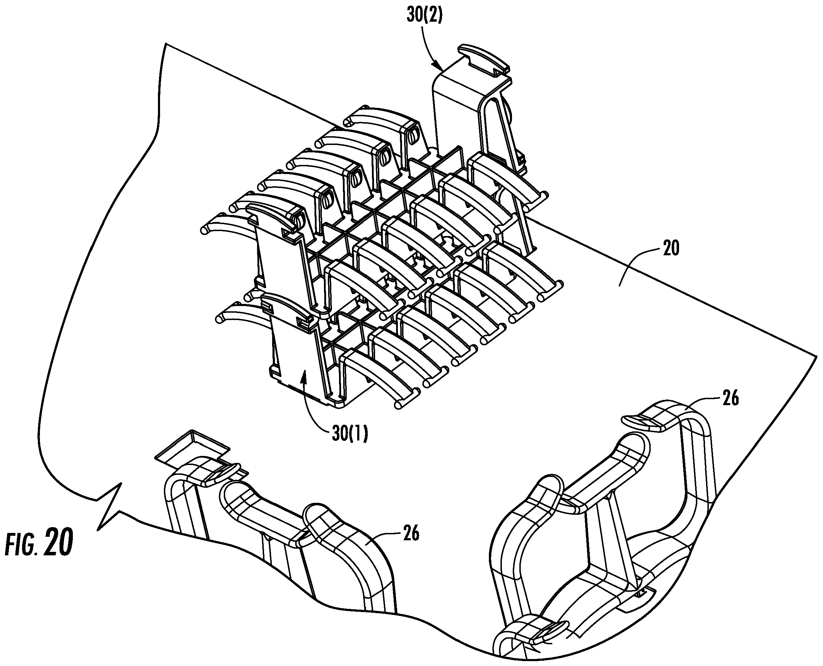

**FIGS. 18A****-18D** are perspective, front, top, and side views, respectively, of the fiber body holder **30** disposed in the stackable shelf **10** in **FIG. 1A****-2D.** As previously discussed and illustrated in **FIG. 2D****,** the fiber body holder **30** is configured to hold and support the fiber furcation bodies **32** disposed in the stackable shelf **10.** The fiber body holder **30** contains a plurality of channels **190** disposed between extension members **191.** Each of the plurality of channels **190** is configured to support a fiber body holder **30** disposed therein. End sections **192A, 192B** provide for the ability of a technician to grip the fiber body holder **30** and to squeeze a latch **194** so that protrusion members **196A, 196B** can be inserted into receivers **198 (****FIG. 19A****)** disposed in the mounting surface **20** to secure the fiber body holder **30** to the mounting surface **20.** This is illustrated in the perspective bottom view of the mounting surface **20** in **FIG. 19A** and the side view of the mounting surface **20** in **FIG. 19C** to secure the fiber body holder **30** to the mounting surface **20.** If additional capacity is needed or desired to support additional fiber bodies **32,** an additional fiber body holder **30(2)** can be provided and stacked on top of the fiber body holder **30(1)** secured to the mounting surface **20** of the stackable shelf **10,** as illustrated in **FIG. 20****.**

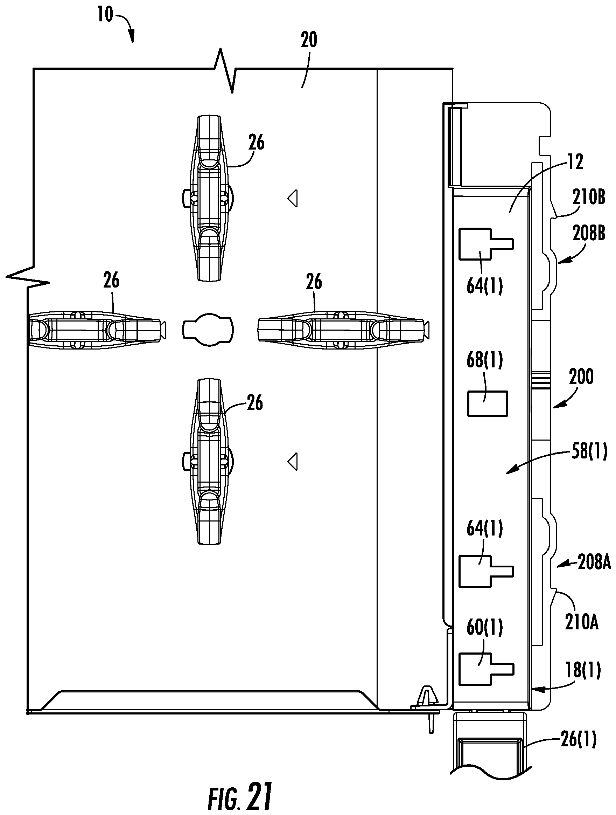

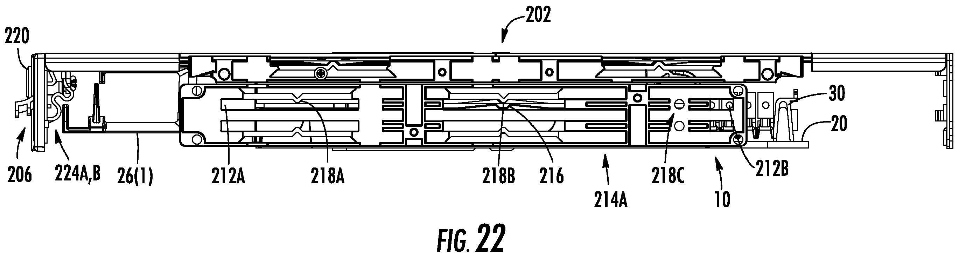

Once the stackable shelf **10** is configured with the desired fiber optic equipment, the stackable shelf **10** is configured to be inserted into a fiber optic housing. The fiber optic housing containing the stackable shelf **10** can then be mounted in an equipment rack. In this regard, **FIG. 21** is a top close-up view of the right side of the stackable shelf **10** illustrating an exemplary rail system **200** configured to allow the stackable shelf **10** to be moveable about and secured within a 1-U fiber optic housing **202,** as illustrated in **FIGS. 22-24.** A rail system like that of the exemplary rail system **200** is also disclosed in U.S. Patent Application Serial No. 12/576,806 entitled "Fiber Optic Equipment Guides and Rails Configured With Stopping Position(s), and Related Equipment and Methods," the disclosure of which is relied upon and incorporated herein by reference in its entirety.

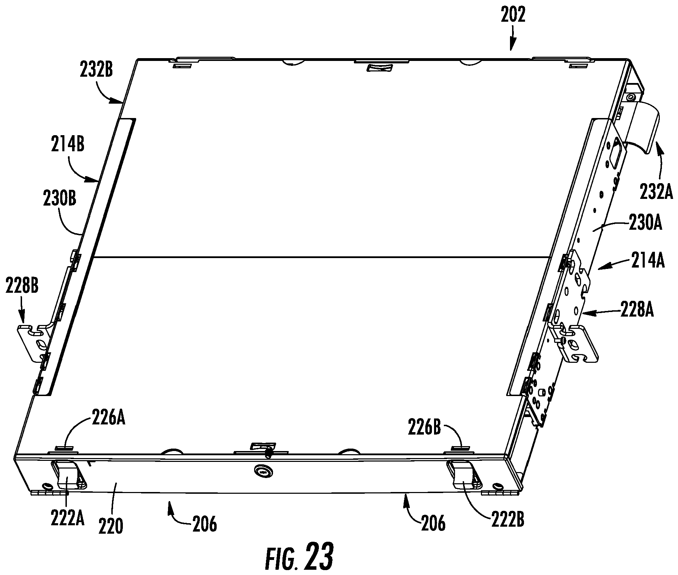

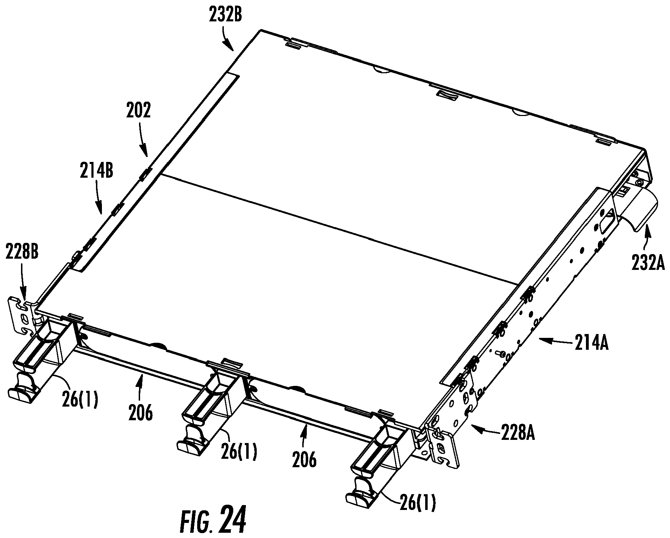

**FIG. 22** is a side view of the right side, transparent view of the stackable shelf **10** of **FIGS. 1A****-2D** installed inside the fiber optic housing **202.** **FIG. 23** is a perspective view of the fiber optic housing **202** that includes the stackable shelf **10** in **FIG. 22** with mounting brackets **228A, 228B** installed in a rear position of the fiber optic housing **202** wherein the front fiber routing guides **22(1)** do not extend beyond a front **206** of the fiber optic housing **202.** **FIG. 24** is a perspective view of the fiber optic housing **202** that includes the stackable shelf **10** in **FIG. 22** with mounting brackets **204A, 204B** installed in a front position on the fiber optic housing **202,** wherein the front fiber routing guides **22(1)** extend beyond the front **206** of the fiber optic housing **202.**

As illustrated in **FIG. 21****,** the rail system **200** contains two leaf springs **208A, 208B.** The leaf springs **208A, 208B** contain protrusions **210A, 210B** that are configured to engage with stops **212A, 212B** inside sides **214A, 214B** of the fiber optic housing **202,** as illustrated in **FIGS. 21** and **22****.** The stops **212A, 212B** prevent the stackable shelf **10** from being removed from the fiber optic housing **202** unless enough force is applied to the stackable shelf **10** to bend the leaf springs **208A, 208B** to allow the protrusions **210A, 210B** to clear the stops **212A, 212B.** As illustrated in **FIG. 22****,** a detent **216** disposed in the rail system **200** of the stackable shelf **10** is configured to receive protrusions **218A-218C.** The protrusions **218A-218C** provide stopping positions for the stackable shelf **10** to be moved in and out of the fiber optic housing **202** for access and storage without having to fully remove the stackable shelf **10** from the fiber optic housing **202.**

As illustrated in **FIGS. 22** and **23****,** the fiber optic housing **202** may be configured with a door **220** that can be closed to secure the stackable shelf **10** inside the fiber optic housing **202.** Release latches **222A, 222B** are provided in the door **220** to allow the door **220** to be opened when the release latches **222A, 222B** are engaged downward to release locks **224A, 224B** from openings **226A, 226B.** Mounting brackets **228A, 228B** are installed on the sides **214A, 214B** of the fiber optic housing **202,** respectively, to allow the fiber optic housing **202** to be mounted in an equipment rack. The fiber optic housing **202** contains mounting receivers **230A, 230B** that allow the mounting brackets **228A, 228B** to be positioned behind the front **206** of the fiber optic housing **202,** as illustrated in **FIG. 23****,** or at the front **206** of the fiber optic housing **202,** as illustrated in **FIG. 24****.** Strain relief brackets **232A, 232B** are provided to relieve strain from optic fibers routed to the fiber optic housing **202.**

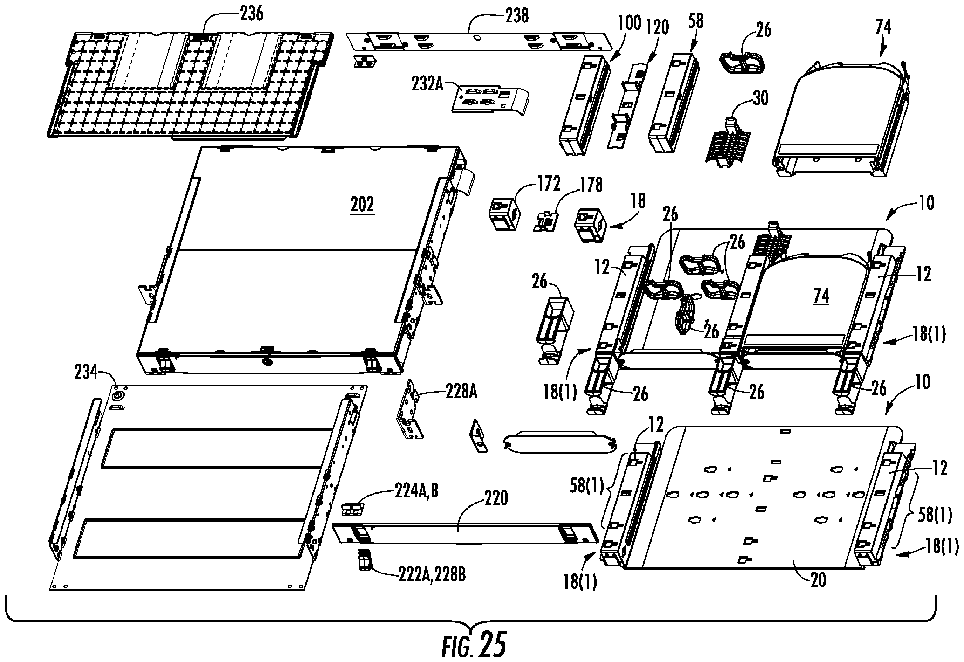

**FIG. 25** includes perspective views of exemplary components used to provide a stackable shelf **10** supporting fiber optic equipment in the fiber optic housing **202.** Previous elements already described are shown with common element numbers and are not re-described. The fiber optic housing **202** in this embodiment is comprised of a base **234,** a cover **236** attached to the base **234,** a rear section **238,** and the door **220.**

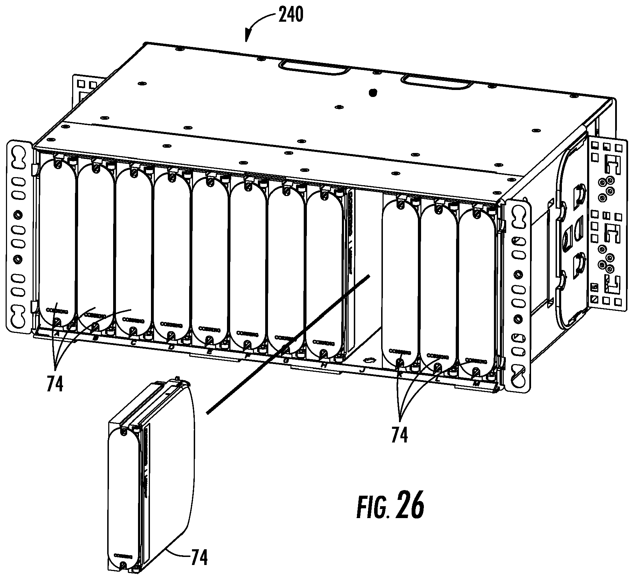

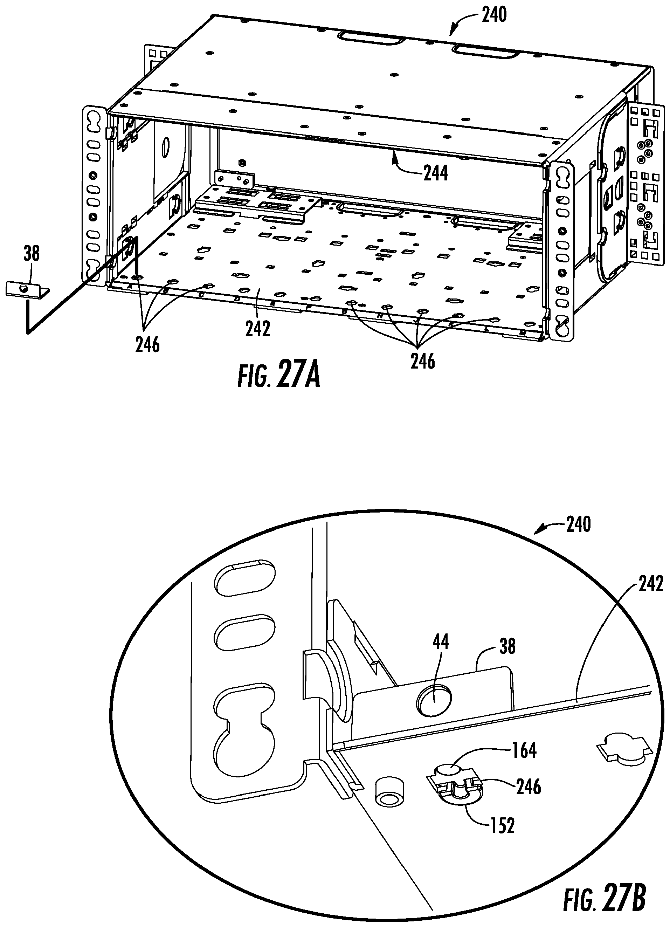

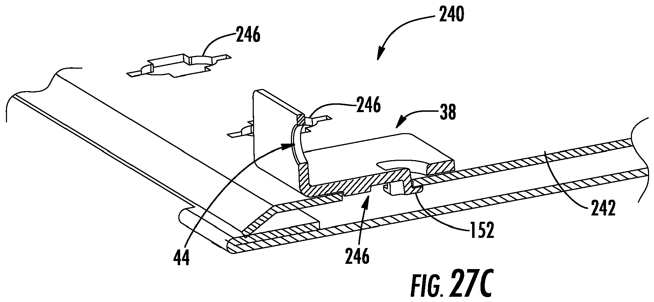

**FIG. 26** is a perspective view of an alternative fiber optic housing **240** configured to support the fiber optic modules **74** and fiber optic panels **16** interchangably by employing the removable panel clip **38.** However, the fiber optic housing **240** is configured to support fiber optic equipment in a vertical orientation as opposed to a horizontal orientation as provided in the fiber optic housing **202** in **FIGS. 22-24.** **FIG. 26** illustrates the fiber optic housing **240** supporting the fiber optic modules **74.** If it is desired to provide fiber optic panels **16** in the fiber optic housing **240,** the removable panel clips **38** can be installed in a base **242** and a top **244** of the fiber optic housing **240,** as illustrated in **FIGS. 27A****-27C.** **FIGS. 27A****-27C** are perspective, perspective close-up, and perspective close-up cut section views, respectively, of the removable panel clip **38** installed in the fiber optic housing **240** to enable the fiber optic housing **240** to support fiber optic panels **16** and fiber optic modules **74** interchangably. The base **242** contains receivers **246** in the form of openings that contain the same form as the receivers **104A, 104B** in the front stacker assembly **18** in **FIGS. 12A****-12F** to receive and secure the flange **152** of the removable panel clip **38.** The removable panel clip **38** is secured to the receiver **246** in the base **242** in the same manner as the removable panel clip **38** is secured to the receiver **104A, 104B** of the front stacker assembly **18** as previously described and illustrated in **FIGS. 15A****-16E,** and thus is not be re-described herein.

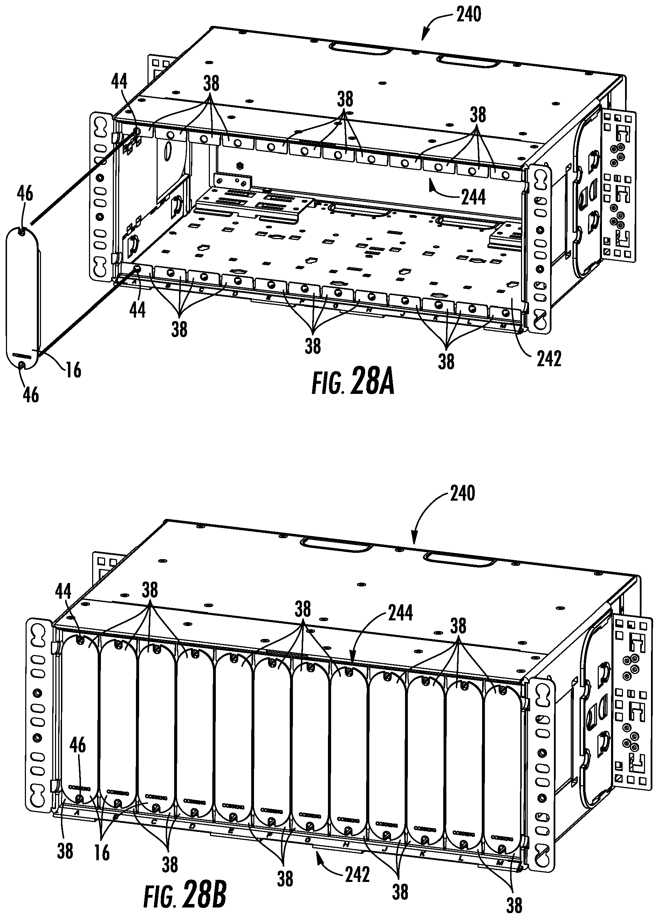

**FIG. 28A** is a perspective view of the fiber optic housing in **FIG. 27A** with the removable panel clips **38** installed in the base **242** and the top **244** to be able support fiber optic panels **16.** **FIG. 28B** is a perspective view of the fiber optic housing **240** in **FIG. 27A** with the removable panel clips **30** installed and the inserts **46** of the fiber optic panels **16** inserted into the receivers **44** of the removable panel clips **38** to support the fiber optic panels **16** in the fiber optic housing **240.**

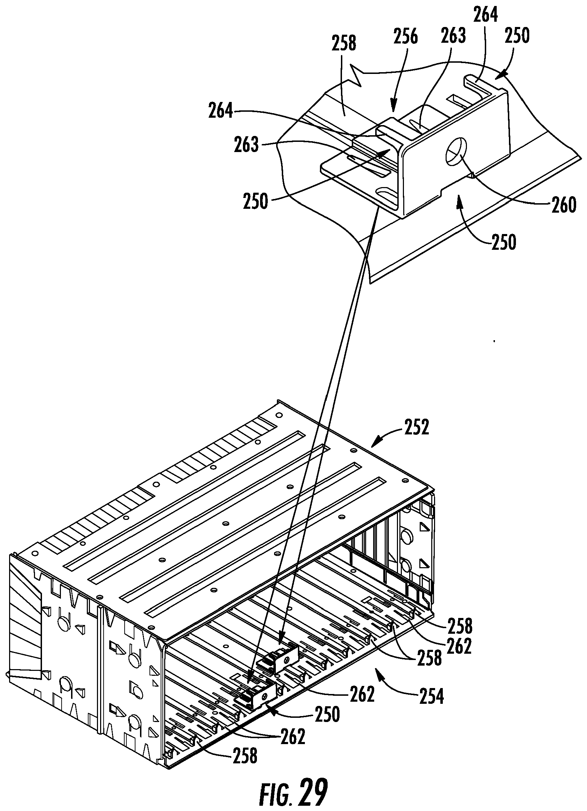

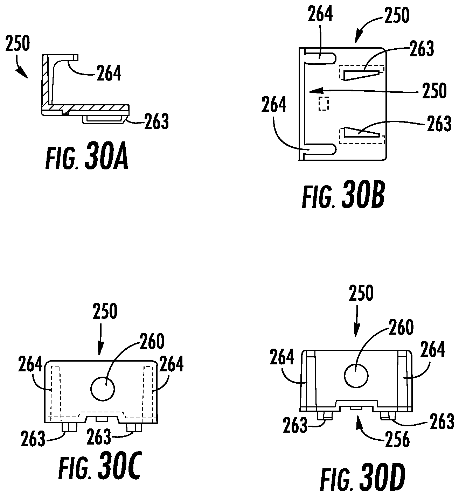

**FIG. 29** is a perspective view of another alternative exemplary removable panel clip **250** installed in another alternative fiber optic housing **252** to enable the fiber optic housing **252** to interchangeably support fiber optic panels and fiber optic modules. **FIGS. 30A****-30D** illustrate bottom, side, front, and back side views, respectively, of the removable panel clip **250** in **FIG. 29****.** The removable panel clips **250** are configured to be attached to a rail system **254** disposed in the fiber optic housing **252** to attach the removable panel clips **250** to the fiber optic housing **252** to support fiber optic panels. The rail system **254** is configured to support fiber optic modules in the fiber optic housing **252** when the removable panel clip **250** is not attached to the rail system **254.** In this regard, the removable panel clips **250** each comprise an opening **256** configured to receive a rail **258** disposed in the fiber optic housing **252** to attach the removable panel clips **250** to the fiber optic housing **252.** Like the removable panel clip **38,** the removable panel clip **250** contains a receptacle **260** disposed therein that is configured to receive an insert from a fiber optic panel to secure the fiber optic panel to the removable panel clip **250** and thus the fiber optic housing **252.** Protrusions **263** are disposed in the removable panel clip **252,** as illustrated in **FIG. 29****,** that are configured to engage with receivers **262** to further secure the removable panel clips **250** to the fiber optic housing **252.** A support member **264** is disposed or provided as part of the removable panel clip **250** to provide structural support, as illustrated in **FIGS. 30A** and **30B****.**

**FIGS. 31A-1** and **31A-2** are top perspective views of first and second front stacker assembly components **270, 272,** respectively, that are configured to be assembled together to form an alternative assembled front stacker assembly that can be installed in a stackable shelf, including but not limited to the stackable shelf **10,** to support fiber optic equipment, including but not limited to fiber optic panels and fiber optic modules. In this regard, the first front stacker assembly component **270** is configured to fit and be secured to the second front stacker assembly component **272** to provide an assembled front stacker assembly. The second front stacker assembly component **272** contains protrusions **274** that are configured to fit inside and be secured to openings **276** in the first front stacker component **270.** The assembled front stacker assembly can be secured to a mounting surface of a stackable shelf and fiber optic equipment secured thereto to support fiber optic equipment on a mounting surface.

**FIGS. 31B-1** and **31B-2** are bottom perspective views of the front stacker assembly components **270, 272** in **FIGS. 31A-1** and **31A-2,** respectively, that are configured to be assembled together to form an alternative assembled front stacker assembly that can be installed in a stackable shelf to support fiber optic equipment. **FIGS. 31C-1** and **31C-2** are first side views of the front stacker assembly components **270, 272** in **FIGS. 31A-1** and **31A-2,** respectively, that are configured to be assembled together to form an alternative assembled front stacker assembly that can be installed in a stackable shelf to support fiber optic equipment. **FIGS. 31D-1** and **31D-2** are second side views of the front stacker assembly components **270, 272** in **FIGS. 31A-1** and **31A-2,** respectively, that are configured to be assembled together to form an alternative assembled front stacker assembly that can be installed in a stackable shelf to support fiber optic equipment. **FIGS. 31E-1** and **31E-2** are bottom views of the front stacker assembly components **270, 272** in **FIGS. 31A-1** and **31A-2,** respectively, that are configured to be assembled together to form an alternative assembled front stacker assembly that can be installed in a stackable shelf to support fiber optic equipment. **FIGS. 31F-1** and **31F-2** are top views of the front stacker assembly components **270, 272** in **FIGS. 31A-1** and **31A-2,** respectively, that are configured to be assembled together to form an alternative assembled front stacker assembly that can be installed in a stackable shelf to support fiber optic equipment.

**FIGS. 32A-1** and **32A-2** are top perspective views of first and second rear stacker assembly components **280, 282,** respectively, that are configured to be assembled together to form an alternative assembled rear stacker assembly that can be installed in a stackable shelf, including but not limited to the stackable shelf **10,** to support fiber optic equipment, including but not limited to fiber optic panels, fiber optic modules, and fiber optic cassettes. In this regard, the first rear stacker assembly component **280** is configured to fit and be secured to the second rear stacker assembly component **282** to provide an assembled rear stacker assembly. The first rear stacker component **280** contains protrusions **284** that are configured to fit inside and be secured to openings **286** in the second rear stacker component **282.** The assembled rear stacker assembly can be secured to a mounting surface of a stackable shelf and fiber optic equipment secured thereto to support fiber optic equipment on a mounting surface.

**FIGS. 32B-1** and **32B-2** are first side views of the rear stacker assembly components **280, 282** in **FIGS. 32A-1** and **32A-2,** respectively, that are configured to be assembled together to form an alternative assembled rear stacker assembly that can be installed in a stackable shelf to support fiber optic equipment. **FIGS. 32C-1** and **32C-2** are second side views of the rear stacker assembly components **280, 282 in** **FIGS. 32A-1** and **32A-2,** respectively, that are configured to be assembled together to form an alternative assembled rear stacker assembly that can be installed in a stackable shelf to support fiber optic equipment. **FIGS. 32D-1** and **32D-2** are top views of the stacker assembly components **280, 282 in** **FIGS. 32A-1** and **32A-2,** respectively, that are configured to be assembled together to form an alternative assembled rear stacker assembly that can be installed in a stackable shelf to support fiber optic equipment. **FIGS. 32E-1** and **32E-2** are third side views of the rear stacker assembly components **280, 282** in **FIGS. 32A-1** and **32A-2,** respectively, that are configured to be assembled together to form an alternative assembled rear stacker assembly that can be installed in a stackable shelf to support fiber optic equipment. **FIGS. 32F-1** and **32F-2** are bottom views of the rear stacker assembly components **280, 282 in** **FIGS. 32A-1** and **32A-2,** respectively, that are configured to be assembled together to form an alternative assembled rear stacker assembly that can be installed in a stackable shelf to support fiber optic equipment.

Many modifications and other embodiments of the invention set forth herein will come to mind to one skilled in the art to which the invention pertains having the benefit of the teachings presented in the foregoing descriptions and the associated drawings. As discussed herein, a stacker assembly is any component, member, or assembly that is configurable to support fiber optic equipment at a different desired height or heights (e.g., U spaces) from a surface, including but not limited to the mounting surface **20** provided for the stackable shelves **10, 10'** disclosed and discussed herein. As non-limiting examples set forth below, the stackable shelves disclosed herein can includes features which allow components to stack on it. These features could be holes, slots, or other geometries which allow other components to attach to the stackable shelf by snapping or sliding into place. Front stacker assemblies can serve several purposes. One is to provide the front stacker assemblies as one of the potential building blocks that allow for conversion among rack spacings. The stacker assemblies can also contain features to retain fiber optic panels, fiber optic modules, cassettes, or other pieces of equipment. Connectors, splices, splitters, and other components may be held in place by the front stacker assemblies and/or the rear stacker assemblies.

The rear stacker assembly can assist in extending the support structure in the depth of the housing dimension. For instance, if the piece of equipment to be installed in the housing takes up a significant amount of the depth of the housing, it may require support throughout its length. By breaking up the stacking components into a front stacker assembly and a rear stacker assembly, the flexibility to accommodate more potential installation situations and configurations can be increased without dramatically increasing the complexity of the housing. The front routing guide can be provided to attach to both the stackable shelf and the front stacker assembly.

The removable panel clip, front stacker assembly, and rear stacker assembly may be removably attached to the stackable shelves to allow the stackable shelves to accommodate both fiber optic modules, cassettes and fiber optic panels, either together or separately, and whether or not the fiber optic modules, cassettes or fiber optic panels employ plungers or a track-type system as their method of retention in and to the stackable shelf In this regard, the fiber optic housings in which the stackable shelf movably mounts can be compatible for either or both fiber optic modules, cassettes and/or fiber optic panels. Further, the fiber optic modules, cassettes and fiber optic panels may be interchangeable on the stackable shelf and, therefore, within the fiber optic housing. The stackable shelves, the removable panel clips, the front stacker assemblies, and the rear stacker assemblies may be constructed to snap together to easily facilitate initial configuration or subsequent reconfiguration of the stackable shelves.

The removable panel clips can serve as an adapter piece which allows plunger-style panels to be used where a track-type method of retention is used. The removable panel clips can contains protrusions on the exterior that snap into a raised portion of the stackable shelf and slide over the track feature. The front stacker assembly pieces and rear stacker assembly pieces can be composed of two (2) wedge-shaped pieces which snap together and in turn contain features which allow them to attach to the mounting surface of the stackable shelf. The front stacker assemblies may be shorter than the rear stacker assemblies. The stacker assemblies may allow a track-type module to be used in a housing that accommodates plunger-style panels. The removable panel clips can be used alone or in combination with the front stacker assembly and/or rear stacker assembly depending on the desired configuration. The material of construction may be metal or non-metal as examples. The removable panel clips could also be reversed one hundred eighty (180) degrees from the orientations discussed and illustrated above to allow the fiber optic panel position disposed therein to move independently, allowing the use of attenuators and/or other fiber optic devices, if desired.

The routing guides may be configured to rotatably attach to a mounting surface, such as, for example, a stackable shelf using an attachment feature. The attachment feature may have a pattern of specifically shaped holes in the surface of the stackable shelf that allows the routing guide to lock in place at various angles. The pattern of holes on the stackable shelf, or other mounting surface, can include an access hole and a plurality of locater holes. The base of the routing guide can be inserted into the access hole. The routing guide can lock into place by turning the routing guide counterclockwise as an example. A sloped profile of the base in combination with a "tooth" protruding from the base of the routing guide can be configured to snap into one of several locator holes allowing the routing guide to releasably lock into place at that angular position.

The placement of the access hole and locator holes in the mounting surface may resemble a "paw print" shape. The access hole can be shaped such that the routing guide can only be inserted in one particular orientation. The locator holes can be spaced such that after the routing guide has been inserted, it can be rotated counterclockwise allowing the protrusion or "tooth" on the routing guide base to interact with the holes to effectively lock it into an angled position. The holes can be situated on the centerline of the path of the tooth of the routing guide as it is rotated to provide multiple locking positions as desired. In this manner, the protrusion is movably positionable into different ones of the locater holes.

The base of the routing guides can have a spherical protrusion that engages the locator holes in the mounting surface. The spherical shape allows the guide to releasably lock in position, but also allows for movement and adjustability in either direction if additional force is applied. The profile of the base is sloped so that constant tension is maintained between the underside of the mounting surface and the base. The routing guide may be provided as segments. In this regard, the routing guide may have diagonal posts on the interior of the upper portion. These posts provide different segments in the upper portion allowing for the segregation or separation of fiber types or bundles. For instance, if the user intends to store slack for both buffer tubes and 250 micrometers (µm) fiber, one type can be stored in the interior of the posts while the other can be stored underneath the posts inside the routing guide.

The routing guide may be constructed of metal or non-metal material as examples. Additionally, the shape of the routing guide could be a different shape than what is shown. Moreover, the footprint of the hole arrangement of the attachment feature could also vary. In addition, the features could be reversed - the hole could be on the routing guide and the tooth protrusion could be on the mounting surface.

Further, as used herein, it is intended that terms "fiber optic cables" and/or "optical fibers" include all types of single mode and multi-mode light waveguides, including one or more optical fibers that may be bare, upcoated, colored, buffered, tight-buffered, loose-tube, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive, or bend resistant, optical fiber is ClearCurve^{®} Multimode fiber commercially available from Corning Incorporated. Suitable fibers of this type are disclosed, for example, in U.S. Patent Application Publication Nos. 2008/0166094 and 2009/0169163.

Therefore, it is to be understood that the embodiments are not to be limited to the specific embodiments disclosed and that modifications and other embodiments are intended to be included. It is intended that the embodiments cover the modifications and variations of this invention. Although specific terms are employed herein, they are used in a generic and descriptive sense only and not for purposes of limitation.

## Claims

1. A fiber optic shelf configured to be supported in a fiber optic housing, comprising:
a mounting surface (20); and
one or more removable panel clips (38) attached to the mounting surface (10);
wherein each of the one or more removable panel clips (38) includes at least one receptacle (44) configured to receive an insert (46) of a fiber optic panel (16) to support the fiber optic panel (16) to the mounting surface (20),
**characterized in that**
each of the one or more removable panel clips (38) is attached to a removable stacker assembly (18) disposed in the mounting surface (20), wherein the removable stacker assembly is configured to allow stacking additional stacker assemblies on top of it.

2. The fiber optic shelf of claim 1, wherein the mounting surface (20) is also configurable to support one or more fiber optic modules (74) and one or more fiber optic panels (16) interchangably.

3. The fiber optic shelf of claim 2, wherein the mounting surface (20) is configured to support the one or more fiber optic modules (74) without employing the one or more removable panel clips (38).

4. The fiber optic shelf of claim 1, wherein each of the one or more removable panel clips (38) is disposed in the mounting surface (20) to support fiber optic panels (16) in a horizontal orientation.

5. The fiber optic shelf of claim 1, further comprising a plurality of removable stacker assemblies (18) stacked in relation to each other, and wherein the one or more removable panel clips (38) are comprised of a plurality of removable panel clips (38), each one of which is attached to a removable stacker assembly (18) among the plurality of removable stacker assemblies (18).

6. The fiber optic shelf of claim 1, further comprising at least one opening disposed in the removable stacker assembly (18) configured to receive a flange (152) disposed in a removable panel clip (38) among the one or more removable panel clips (38) to attach the removable panel clip (38) to the removable stacker assembly (18).

7. The fiber optic shelf of claim 6, wherein the at least one opening (104A, 104B) is comprised of a first opening (104A) disposed on a first side (106) of the removable stacker assembly (18) and a second opening (104B) disposed on a second side (108) of the removable stacker assembly (18) opposite of the first side (106), each of the first opening (104A) and the second opening (104B) configured to receive the flange (152) disposed in a removable panel clip (38) among the one or more removable panel clips (38) to attach the removable panel clip (38) to the removable stacker assembly (18).

8. The fiber optic shelf of claim 6, wherein the flange (152) is configured to be inserted in a first area (158) of the at least one opening (104A, 104B) and slid into a second area (160) of the at least one opening (104A, 104B) to attach the removable panel (38) clip to the removable stacker assembly (18).

9. The fiber optic shelf of claim 6, further comprising a protrusion (164) disposed in the removable panel clip (38) configured to be inserted into the at least one opening (104A, 104B).

10. The fiber optic shelf of claim 9, wherein the flange (152) is disposed in a first side of the removable panel clip (38), and the receptacle (44) is disposed in adjacent second side (42) adjacent to the first side (40) of the removable panel clip (38).

11. A method of supporting fiber optic panels (16) in a shelf configured to support fiber optic modules (74), comprising:
attaching a removable panel clip (38) that includes at least one receptacle (44) in a mounting surface (20) configured to support the fiber optic modules (74);
installing a fiber optic panel (16) in the mounting surface (20) such that at least one insert of the fiber optic panel (16) is aligned with the at least one receptacle (44); and
inserting the at least one insert into the at least one receptacle (44) to support the fiber optic panel (16) in the mounting surface (20),
**characterized in that**
attaching the removable panel clip (38) further comprises attaching the removable panel clip (38) to a removable stacker assembly (18) disposed in the mounting surface (20), wherein the removable stacker assembly is configured to allow stacking additional stacker assemblies on top of it.

12. The method of claim 11, further comprising stacking a plurality of removable stacker assemblies (18) on the mounting surface (20) and attaching each of a plurality of the removable panel clips (28) to one of the plurality of removable stacker assemblies (18).

13. The method of claim 11, wherein attaching the removable panel clip (38) further comprises inserting a flange (152) disposed in the removable panel clip (38) into an opening (104A, 104B) disposed in the removable stacker assembly (18).

14. The method of claim 13, wherein attaching the removable panel clip (38) further comprises sliding the flange (152) from a first area (158) in the opening (104A, 104B) into a second area (160) of the opening (104A, 104B).

15. The method of claim 13, wherein attaching the removable panel clip (38) further comprises inserting a protrusion (164) disposed in the removable panel clip (38) into the opening (104A, 104B).

## Patentansprüche

1. Faseroptikeinschub, der dazu konfiguriert ist, in einem Faseroptikgehäuse gehalten zu werden, und der Folgendes umfasst:
eine Montageoberfläche (20); und
eine oder mehrere entfernbare Panelklammern (38), die an der Montageoberfläche (10) angebracht sind;
wobei jede der einen oder der mehreren entfernbaren Panelklammern (38) wenigstens eine Aufnahme (44) beinhaltet, die dazu konfiguriert ist, ein Einsatzstück (46) eines Faseroptikpanels (16) aufzunehmen, um das Faseroptikpanel (16) an der Montageoberfläche (20) zu halten,
**dadurch gekennzeichnet, dass**
jede der einen oder der mehreren entfernbaren Panelklammern (38) an einer entfernbaren Stapelbaugruppe (18) angebracht ist, die an der Montageoberfläche (20) angeordnet ist, wobei die entfernbare Stapelbaugruppe so konfiguriert ist, dass es möglich ist, zusätzliche Stapelbaugruppen auf ihr zu stapeln.

2. Faseroptikeinschub nach Anspruch 1, wobei die Montageoberfläche (20) auch dazu konfigurierbar ist, austauschbar ein oder mehrere Faseroptikmodule (74) und eine oder mehrere Faseroptikpanele (16) zu halten.

3. Faseroptikeinschub nach Anspruch 2, wobei die Montageoberfläche (20) dazu konfiguriert ist, das eine oder die mehreren Faseroptikmodule (74) zu halten, ohne die eine oder die mehreren entfernbaren Panelklammern (38) einzusetzen.

4. Faseroptikeinschub nach Anspruch 1, wobei jede der einen oder der mehreren entfernbaren Panelklammern (38) an der Montageoberfläche (20) angeordnet ist, um Faseroptikpanele (16) in einer horizontalen Orientierung zu halten.

5. Faseroptikeinschub nach Anspruch 1, der ferner mehrere entfernbare Stapelbaugruppen (18) umfasst, die in Bezug zueinander gestapelt sind, und wobei die eine oder die mehreren entfernbaren Panelklammern (38) aus mehreren entfernbaren Panelklammern (38) bestehen, von denen jede an einer entfernbaren Stapelbaugruppe (18) unter den mehreren entfernbaren Stapelbaugruppen (18) angebracht ist.

6. Faseroptikeinschub nach Anspruch 1, der ferner wenigstens eine Öffnung umfasst, die in der entfernbaren Stapelbaugruppe (18) angeordnet ist und die dazu konfiguriert ist, einen Flansch (152), der in einer entfernbaren Panelklammer (38) unter der einen oder den mehreren entfernbaren Panelklammern (38) angeordnet ist, aufzunehmen, um die entfernbare Panelklammer (38) an der entfernbaren Stapelbaugruppe (18) anzubringen.

7. Faseroptikeinschub nach Anspruch 6, wobei die wenigstens eine Öffnung (104A, 104B) aus einer ersten Öffnung (104A), die auf einer ersten Seite (106) der entfernbaren Stapelbaugruppe (18) angeordnet ist, und einer zweiten Öffnung (104B), die auf einer der ersten Seite (106) gegenüberliegenden zweiten Seite (108) der entfernbaren Stapelbaugruppe (18) angeordnet ist, besteht, wobei jede der ersten Öffnung (104A) und der zweiten Öffnung (104B) dazu konfiguriert ist, den Flansch (152), der in einer entfernbaren Panelklammer (38) unter der einen oder den mehreren entfernbaren Panelklammern (38) angeordnet ist, aufzunehmen, um die entfernbare Panelklammer (38) an der entfernbaren Stapelbaugruppe (18) anzubringen.

8. Faseroptikeinschub nach Anspruch 6, wobei der Flansch (152) dazu konfiguriert ist, in einen ersten Bereich (158) der wenigstens einen Öffnung (104A, 104B) eingesetzt zu werden und in einen zweiten Bereich (160) der wenigstens einen Öffnung (104A, 104B) zu gleiten, um die entfernbare Panelklammer (38) an der entfernbaren Stapelbaugruppe (18) anzubringen.

9. Faseroptikeinschub nach Anspruch 6, der ferner eine Ausbuchtung (164) umfasst, die in der entfernbaren Panelklammer (38) angeordnet ist und die so konfiguriert ist, dass die in die wenigstens eine Öffnung (104A, 104B) eingesetzt zu werden.

10. Faseroptikeinschub nach Anspruch 9, wobei der Flansch (152) an einer ersten Seite der entfernbaren Panelklammer (38) angeordnet ist und die Aufnahme (44) an einer angrenzenden zweiten Seite (42) angrenzend an die erste Seite (40) der entfernbaren Panelklammer (38) angeordnet ist.

11. Verfahren zum Halten von Faseroptikpanelen (16) in einem Einschub, der zum Halten von Faseroptikmodulen (74) konfiguriert ist, das Folgendes umfasst:
Anbringen einer entfernbaren Panelklammer (38), die wenigstens eine Aufnahme (44) beinhaltet, an einer Montageoberfläche (20), die dazu konfiguriert ist, die Faseroptikmodule (74) zu halten;
Installieren eines Faseroptikpanels (16) an der Montageoberfläche (20), so dass wenigstens ein Einsatzstück des Faseroptikpanels (16) mit der wenigstens einen Aufnahme (44) ausgerichtet ist; und
Einsetzen des wenigstens einen Einsatzstückes in die wenigstens eine Aufnahme (44), um das Faseroptikpanel (16) an der Montageoberfläche (20) zu halten,
**dadurch gekennzeichnet, dass**
Anbringen der entfernbaren Panelklammer (38) ferner Anbringen der entfernbaren Panelklammer (38) an einer entfernbaren Stapelbaugruppe (18), die an der Montageoberfläche (20) angeordnet ist, umfasst, wobei die entfernbare Stapelbaugruppe dazu konfiguriert ist, zu ermöglichen, zusätzliche Stapelbaugruppen auf ihr zu stapeln.

12. Verfahren nach Anspruch 11, das ferner Stapeln mehrerer entfernbarer Stapelbaugruppen (18) auf der Montageoberfläche (20) und Anbringen jeder der mehreren entfernbaren Panelklammern (28) an einer der mehreren entfernbaren Stapelbaugruppen (18) umfasst.

13. Verfahren nach Anspruch 11, wobei Anbringen der entfernbaren Panelklammer (38) ferner Einsetzen eines Flansches (152), der in der entfernbaren Panelklammer (38) angeordnet ist, in eine Öffnung (104A, 104B), die in der entfernbaren Stapelbaugruppe (18) angeordnet ist, umfasst.

14. Verfahren nach Anspruch 13, wobei Anbringen der entfernbaren Panelklammer (38) ferner Gleiten des Flansches (152) von einem ersten Bereich (158) in der Öffnung (104A, 104B) in einen zweiten Bereich (160) der Öffnung (104A, 104B) umfasst.

15. Verfahren nach Anspruch 13, wobei Anbringen der entfernbaren Panelklammer (38) ferner Einsetzen einer Ausbuchtung (164), die in der entfernbaren Panelklammer (38) angeordnet ist, in die Öffnung (104A, 104B) umfasst.

## Revendications

1. Etagère de fibres optiques configurée pour être supportée dans un boîtier de fibres optiques, comprenant :
une surface de montage (20) ; et
une ou plusieurs attaches de panneau amovible (38) fixées à la surface de montage (10) ;
la ou chacune des attaches de panneau amovible (38) comportant au moins un réceptacle (44) configuré pour recevoir une pièce rapportée (46) d'un panneau de fibres optiques (16) pour faire supporter le panneau de fibres optiques (16) par la surface de montage (20),
**caractérisée en ce que**
la ou chacune des attaches de panneau amovible (38) est fixée à un ensemble d'empilement amovible (18) disposé dans la surface de montage (20), l'ensemble d'empilement amovible étant configuré pour permettre l'empilement d'ensembles d'empilement supplémentaires au-dessus de lui.

2. Etagère de fibres optiques de la revendication 1, dans laquelle la surface de montage (20) est également configurable pour supporter un ou plusieurs modules de fibres optiques (74) et un ou plusieurs panneaux de fibres optiques (16) de façon interchangeable.

3. Etagère de fibres optiques de la revendication 2, dans laquelle la surface de montage (20) est configurée pour supporter le ou les modules de fibres optiques (74) sans employer la ou les attaches de panneau amovible (38).

4. Etagère de fibres optiques de la revendication 1, dans laquelle la ou chacune des attaches de panneau amovible (38) est disposée dans la surface de montage (20) pour supporter des panneaux de fibres optiques (16) dans une orientation horizontale.

5. Etagère de fibres optiques de la revendication 1, comprenant en outre une pluralité d'ensembles d'empilement amovibles (18) empilés en relation les uns avec les autres, et dans laquelle la ou les attaches de panneau amovible (38) sont composées d'une pluralité d'attaches de panneau amovible (38), chacune d'entre elles étant fixée à un ensemble d'empilement amovible (18) parmi la pluralité d'ensembles d'empilement amovibles (18).

6. Etagère de fibres optiques de la revendication 1, comprenant en outre au moins une ouverture disposée dans l'ensemble d'empilement amovible (18) configurée pour recevoir une bride (152) disposée dans une attache de panneau amovible (38) parmi la ou les attaches de panneau amovible (38) pour fixer l'attache de panneau amovible (38) à l'ensemble d'empilement amovible (18).

7. Etagère de fibres optiques de la revendication 6, dans laquelle l'au moins une ouverture (104A, 104B) est composée d'une première ouverture (104A) disposée sur un premier côté (106) de l'ensemble d'empilement amovible (18) et d'une deuxième ouverture (104B) disposée sur un deuxième côté (108) de l'ensemble d'empilement amovible (18) à l'opposé du premier côté (106), la première ouverture (104A) et la deuxième ouverture (104B) étant toutes deux configurées pour recevoir la bride (152) disposée dans une attache de panneau amovible (38) parmi la ou les attaches de panneau amovible (38) pour fixer l'attache de panneau amovible (38) à l'ensemble d'empilement amovible (18).

8. Etagère de fibres optiques de la revendication 6, dans laquelle la bride (152) est configurée pour être insérée dans une première zone (158) de l'au moins une ouverture (104A, 104B) et glissée jusqu'à l'intérieur d'une deuxième zone (160) de l'au moins une ouverture (104A, 104B) pour fixer l'attache de panneau amovible (38) à l'ensemble d'empilement amovible (18).

9. Etagère de fibres optiques de la revendication 6, comprenant en outre une saillie (164) disposée dans l'attache de panneau amovible (38) configurée pour être insérée dans l'au moins une ouverture (104A, 104B).

10. Etagère de fibres optiques de la revendication 9, dans laquelle la bride (152) est disposée dans un premier côté de l'attache de panneau amovible (38), et le réceptacle (44) est disposé dans un deuxième côté adjacent (42) adjacent au premier côté (40) de l'attache de panneau amovible (38).

11. Procédé de support de panneaux de fibres optiques (16) dans une étagère configurée pour supporter des modules de fibres optiques (74), comprenant :
la fixation d'une attache de panneau amovible (38) qui comporte au moins un réceptacle (44) dans une surface de montage (20) configurée pour supporter les modules de fibres optiques (74) ;
l'installation d'un panneau de fibres optiques (16) dans la surface de montage (20) de telle sorte qu'au moins une pièce rapportée du panneau de fibres optiques (16) soit alignée avec l'au moins un réceptacle (44) ; et
l'insertion de l'au moins une pièce rapportée dans l'au moins un réceptacle (44) pour supporter le panneau de fibres optiques (16) dans la surface de montage (20),
**caractérisé en ce que**
la fixation de l'attache de panneau amovible (38) comprend en outre la fixation de l'attache de panneau amovible (38) à un ensemble d'empilement amovible (18) disposé dans la surface de montage (20), l'ensemble d'empilement amovible étant configuré pour permettre l'empilement d'ensembles d'empilement supplémentaires au-dessus de lui.

12. Procédé de la revendication 11, comprenant en outre l'empilement d'une pluralité d'ensembles d'empilement amovibles (18) sur la surface de montage (20) et la fixation de chaque attache d'une pluralité d'attaches de panneau amovible (28) à un ensemble de la pluralité d'ensembles d'empilement amovibles (18).

13. Procédé de la revendication 11, dans lequel la fixation de l'attache de panneau amovible (38) comprend en outre l'insertion d'une bride (152) disposée dans l'attache de panneau amovible (38) dans une ouverture (104A, 104B) disposée dans l'ensemble d'empilement amovible (18).

14. Procédé de la revendication 13, dans lequel la fixation de l'attache de panneau amovible (38) comprend en outre le glissement de la bride (152) depuis une première zone (158) dans l'ouverture (104A, 104B) jusqu'à l'intérieur d'une deuxième zone (160) de l'ouverture (104A, 104B).

15. Procédé de la revendication 13, dans lequel la fixation de l'attache de panneau amovible (38) comprend en outre l'insertion d'une saillie (164) disposée dans l'attache de panneau amovible (38) dans l'ouverture (104A, 104B).
